Europäisches Patentamt
European Patent Office
Office européen des brevets

(19)

(11) Veröffentlichungsnummer: **0 045 354**
**A1**

(12)

# EUROPÄISCHE PATENTANMELDUNG

(21) Anmeldenummer: **81103781.1**

(22) Anmeldetag: **18.05.81**

(51) Int. Cl.³: **D 06 P 1/18**
C 09 B 29/06, C 09 B 29/42
//C09B43/124

(30) Priorität: **19.05.80 DE 3019064**

(43) Veröffentlichungstag der Anmeldung:
**10.02.82 Patentblatt 82/6**

(84) Benannte Vertragsstaaten:
**CH DE FR GB IT LI**

(71) Anmelder: **CASSELLA Aktiengesellschaft**
**Hanauer Landstrasse 526**
**D-6000 Frankfurt am Main 61(DE)**

(72) Erfinder: **Bühler, Ulrich, Dr.**
**Nidderaustrasse 13**
**D-6369 Schöneck 1(DE)**

(72) Erfinder: **Ribka, Joachim, Dr.**
**Rügenerstrasse 4**
**D-6050 Offenbach/Main(DE)**

(72) Erfinder: **Tappe, Horst, Dr.**
**Ringstrasse 9**
**D-6057 Dietzenbach(DE)**

(72) Erfinder: **Roth, Kurt**
**Breckenheimerstrasse 35**
**D-6238 Hofheim(DE)**

(74) Vertreter: **Urbach, Hans-Georg, Dr. et al,**
**Hanauer Landstrasse 526**
**D-6000 Frankfurt am Main 61(DE)**

(54) **Verfahren zum Färben und Bedrucken von hydrophoben Fasermaterialien und dazu geeignete Azofarbstoffe.**

(57) Verfahren zum Färben und Bedrucken von hydrophoben Fasermaterialien, bei dem Färbeflotten bzw. Druckpasten eingesetzt werden, die von wasserlöslichmachenden Gruppen freie Azofarbstoffe der Formel I

$$D-N=N-K-N(Z^1)-N-CO-Z \qquad (I)$$

enthalten, worin D den Rest einer Diazokomponente der Naphthalin-, Thiazol-, Thiadiazol-, Benzthiazol-, Benzisothiazol-, Thiophen-Reihe oder einen Rest der Formel II

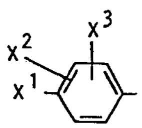
(11)

K den Rest der Formel III

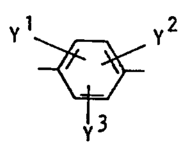
(111)

oder den Rest einer Kupplungskomponente der Naphthylen-, Pyridindiyl-2,5-, Pyridindiyl-2,3- oder Thiazoldiyl-2,5- Reihe, Z einen Rest der Formel VI

$$-C_rH_{2r}-(OC_pH_{2p})_n-H \qquad (VI)$$

$Z^1$ Wasserstoff oder Z bedeuten und die Symbole $X^1$, $X^2$, $X^3$, $Y^1$, $Y^2$, $Y^3$, r und p die im Anspruch 1 angegebenen Bedeutungen haben. Die Farbstoffe der Formel I sind zum Teil neu und insoweit ebenfalls Gegenstand der Erfindung.

EP 0 045 354 A1

Croydon Printing Company Ltd.

<u>Verfahren zum Färben und Bedrucken von hydrophoben Fasermaterialien und dazu geeignete Azofarbstoffe</u>

Die vorliegende Erfindung betrifft ein Verfahren zum Färben und Bedrucken von hydrophoben Fasermaterialien, bei dem Färbeflotten bzw. Druckpasten eingesetzt werden, die von wasserlöslichmachenden Gruppen freie Azofarbstoffe der Formel I

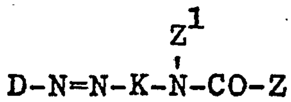 (I)

enthalten. In der Formel I bedeutet D den Rest einer Diazokomponente der Naphthalin-, Thiazol-, Thiadiazol-, Benzthiazol-, Benzisothiazol-, Thiophen-Reihe oder einen Rest der Formel II

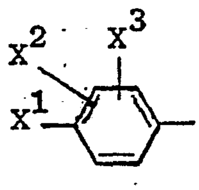 (II)

$X^1$ bedeutet Nitro, Cyan, Trifluormethyl, Alkylsulfonyl mit 1 bis 4 C-Atomen, Phenylsulfonyl, das gegebenenfalls durch Methoxy, Methyl, Chlor, Brom, Nitro substituiert sein kann, Alkoxysulfonyl mit 1 bis 4 C-Atomen, das gegebenenfalls durch Alkoxy mit 1 bis 4 C-Atomen substituiert sein kann, Phenoxysulfonyl, das im Phenylrest gegebenenfalls durch Alkyl mit 1 bis 4 C-Atomen, Alkoxy mit 1 bis 4 C-Atomen, Nitro, Fluor, Chlor oder Brom substituiert sein kann, Alkylcarbonyl mit 1 bis 4 C-Atomen im Alkylrest, Benzoyl, wobei der Phenylrest auch durch Alkyl mit 1 bis 4 C-Atomen, Alkoxy mit 1 bis 4 C-Atomen, Nitro, Fluor, Chlor oder Brom substituiert sein kann, Alkoxycarbonyl mit 1 bis 4 C-Atomen im Alkoxyrest, das gegebenenfalls durch Phenyl, Hydroxy, Alkoxy mit 1 bis 4 C-Atomen oder Alkylcarbonyloxy mit 1 bis 4 C-Atomen im Alkylrest substituiert sein kann, Phenoxycarbonyl, das im Phenylrest gegebenenfalls durch Alkyl mit 1 bis 4 C-Atomen, Alkoxy mit 1 bis 4 C-Atomen, Nitro, Fluor, Chlor oder Brom substituiert sein kann, Aminocarbonyl, Aminosulfonyl, Alkyl-, Di-alkyl-,

Phenyl-alkyl- oder Phenyl-aminocarbonyl mit 1 bis 4 C-Atomen in den Alkylresten, Alkyl-, Dialkyl-, Phenyl-alkyl- oder Phenyl-aminosulfonyl mit 1 bis 4 C-Atomen in den Alkylresten, wobei die Alkylreste der Aminocarbonyl- und Aminosulfonylreste auch noch durch Hydroxy, Alkoxy mit 1 bis 4 C-Atomen oder Alkylcarbonyloxy mit 1 bis 4 C-Atomen im Alkylrest substituiert sein können oder gegebenenfalls unter Einschluß eines Sauerstoffatoms oder einer NH-Gruppe zusammen mit dem Stickstoffatom, an das sie gebunden sind, einen fünf- oder sechsgliedrigen Heterocyclus bilden oder Phenylazo, das durch Cyan, Nitro, Chlor, Brom, Trifluormethyl, Methyl, Ethyl, Methoxy, Ethoxy ein-, zwei- oder dreifach, vorzugsweise ein- oder zweifach substituiert sein kann.

$X^2$ und $X^3$ bedeuten unabhängig voneinander Wasserstoff, Halogen, Alkyl mit 1 bis 4 C-Atomen, Alkoxy mit 1 bis 4 C-Atomen, Phenyl, Phenoxy, oder sie haben eine der unter $X^1$ angegebenen Bedeutungen mit Ausnahme von Phenylazo.

K bedeutet den Rest der Formel III

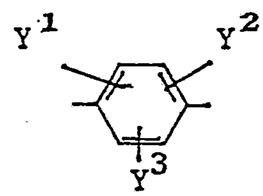

(III)

wobei $Y^1$ Alkyl mit 1 bis 4 C-Atomen, Phenyl, Alkoxy mit 1 bis 4 C-Atomen, das auch durch Phenyl, Phenoxy, Hydroxy, Alkoxy mit 1 bis 4 C-Atomen oder Alkylcarbonyloxy mit 1 bis 4 C-Atomen im Alkylrest substituiert sein kann, Phenoxy, Alkylcarbonylamino mit 1 bis 4 C-Atomen in der Alkylgruppe, das auch durch Chlor, Brom, Hydroxy, Alkoxy mit 1 bis 4 C-Atomen, Alkoxyalkoxy mit 3 bis 8 C-Atomen oder Alkylcarbonyloxy mit 1 bis 4 C-Atomen substituiert sein kann, Benzoylamino, das durch Chlor, Brom, Methyl, Ethyl, Methoxy oder Ethoxy substituiert sein kann, Alkylsulfonylamino mit 1 bis 4 C-Atomen in der Alkylgruppe, Phenylsulfonylamino, Halogen, $Y^2$ Wasserstoff, Halogen, Alkyl mit 1 bis 4 C-Atomen, Alkoxy mit

1 bis 4 C-Atomen, das durch Phenyl, Phenoxy, Alkoxy mit 1 bis 4 C-Atomen oder Alkylcarbonyloxy mit 1 bis 4 C-Atomen substituiert sein kann, Benzyloxy, Phenoxyethoxy, Hydroxyethoxy oder einen Rest $-O(CH_2)_nO(CH_2)_mCH_3$, worin n die Zahlen 2, 3 oder 4 und m die Zahlen 0, 1, 2 oder 3 bedeuten, $Y^3$ Wasserstoff oder Alkyl mit 1 bis 4 C-Atomen bedeuten, oder K bedeutet den Rest einer Kupplungskomponente der Naphthylen-, Pyridindiyl-2,5-, Pyridindiyl-2,3- oder Thiazoldiyl-2,5-Reihe.

Z bedeutet einen Rest der Formel VI $-C_rH_{2r}-(OC_pH_{2p})_n-H$

worin r eine Zahl von 1 bis 8, p eine Zahl von 2 bis 4 und n Null, 1 oder 2, vorzugsweise Null oder 1 ist, mit der Maßgabe, daß die Summe r + np eine Zahl von 3 bis 8 ist, der gegebenenfalls durch Hydroxy, Chlor, Brom, Cyan, Alkoxy mit 1 bis 4 C-Atomen, Alkenoxy mit 3 oder 4 C-Atomen, Cycloalkoxy mit 5 oder 6 C-Atomen, Alkylcarbonyloxy mit 2 bis 4 C-Atomen, Alkoxycarbonyl mit 2 bis 5 C-Atomen, Alkoxyalkoxycarbonyl mit 4 bis 9 C-Atomen, Hydroxyalkoxycarbonyl mit 3 bis 5 C-Atomen, oder durch gegebenenfalls im Phenylkern noch durch Alkyl mit 1 bis 4 C-Atomen oder Alkoxy mit 1 bis 4 C-Atomen, vorzugsweise Methyl oder Methoxy, Chlor, Brom oder Cyan mono- oder disubstituiertes Phenyl, Phenoxy, Benzoyloxy, Phenoxycarbonyl, Phenoxyalkoxycarbonyl mit 2 bis 4 C-Atomen in der aliphatischen Brücke, Phenalkoxycarbonyl mit 1 oder 2 C-Atomen in der aliphatischen Brücke monosubstituiert sein kann und der zusätzlich zu den genannten Substituenten gegebenenfalls noch durch eine Hydroxygruppe substituiert sein kann; Alkenyl mit 2 bis 4, vorzugsweise 3 oder 4 C-Atomen; Cycloalkyl mit 5 oder 6 C-Atomen; Phenyl, das durch Alkyl mit 1 bis 4 C-Atomen, Alkoxy mit 1 bis 4 C-Atomen, Chlor oder Brom, vorzugsweise Methyl oder Methoxy, disubstituiert oder vorzugsweise monosubstituiert sein kann; Alkoxy mit 1 bis 8, vorzugsweise 1 bis 4 C-Atomen, dessen Kohlenstoffkette, sofern sie mindestens 3 C-Atome hat, jeweils im Abstand von mindestens 2 C-Atomen durch Sauerstoff ein- oder mehrfach, vorzugsweise einfach, unterbrochen sein kann, wobei der Mindestabstand der Unterbrechung vom Stickstoffatom 2 C-Atome beträgt, und/oder durch Hydroxy, Chlor, Brom, Cyan, Alkenoxy

BAD ORIGINAL

mit 3 oder 4 C-Atomen oder durch gegebenenfalls im Phenylkern noch durch Alkyl mit 1 bis 4 C-Atomen, Alkoxy mit 1 bis 4 C-Atomen, vorzugsweise Methyl oder Methoxy, Chlor, Brom oder Cyan mono- oder disubstituiertes Phenyl oder Phenoxy disubstituiert oder vorzugsweise monosubstituiert sein kann; Alkenoxy mit 3 oder 4 C-Atomen; Cycloalkoxy mit 5 oder 6 C-Atomen; Phenoxy, dessen Phenylkern durch Alkyl mit 1 bis 4 C-Atomen, Alkoxy mit 1 bis 4 C-Atomen, Chlor oder Brom, vorzugsweise Methyl oder Methoxy, disubstituiert oder vorzugsweise monosubsituiert sein kann; Alkylamino mit 1 bis 8, vorzugsweise 1 bis 4 C-Atomen, dessen Kohlenstoffkette, sofern sie mindestens 3 C-Atome hat, im Mindestabstand von 2 C-Atomen vom Stickstoffatom durch Sauerstoff einfach unterbrochen sein kann und/oder durch Chlor, Brom, Cyan, Alkenoxy oder durch gegebenenfalls im Phenylkern noch durch Alkyl mit 1 bis 4 C-Atomen, Alkoxy mit 1 bis 4 C-Atomen, vorzugsweise Methyl oder Methoxy, Chlor, Brom oder Cyan mono- oder disubstituiertes Phenyl oder Phenoxy disubstituiert oder vorzugsweise monosubstituiert sein kann; Alkenylamino mit 3 oder 4 C-Atomen; Cycloalkylamino mit 5 oder 6 C-Atomen; Phenylamino, dessen Phenylkern durch Alkyl mit 1 bis 4 C-Atomen, Alkoxy mit 1 bis 4 C-Atomen, Chlor oder Brom, vorzugsweise Methyl oder Methoxy, disubstituiert oder vorzugsweise monosubstituiert sein kann.

Phenalkyl mit 1 oder 2 C-Atomen in der aliphatischen Brücke ist Benzyl und Phenethyl, Phenalkoxy mit 1 oder 2 C-Atomen in der aliphatischen Kette Benzyloxy und Phenethoxy.

$Z^1$ ist vorzugsweise Wasserstoff, kann aber auch eine der für Z angegebenen Bedeutungen haben.

Beispiele für Z sind:
Methyl, Ethyl, n-Propyl, i-Propyl, n-Butyl, i-Butyl, sek. Butyl, t-Butyl, n-Pentyl, Pentyl-2, Pentyl-3, Heptyl-3, Benzyl, Phenethyl, Chlormethyl, Brommethyl, Cyanmethyl, Hydroxymethyl, Methoxymethyl, Ethoxymethyl, n-Propoxymethyl, i-Propoxymethyl, n-Butoxymethyl, i-Butoxymethyl, t-Butoxymethyl, Alloxymethyl, Methalloxymethyl, Cyclohexoxymethyl, Phenoxymethyl, Benzyloxymethyl, Acetoxymethyl, Propanoyloxy-

methyl, Butyroxymethyl, Benzoyloxymethyl, Hydroxyethoxymethyl, Methoxyethoxymethyl, Ethoxyethoxymethyl, Butoxyethoxymethyl, 2-Hydroxyethyl, 2-Methoxyethyl, 2-Ethoxyethyl, 2-Butoxyethyl, 2-Phenoxyethyl, 2-Acetoxyethyl, 2-Propoxyethyl, 2-(Methoxyethoxy-)ethyl, 2-(Propoxyethoxy-)ethyl, 2-(4-Methoxybutoxy-)ethyl, 2-Chlorethyl, 2-Bromethyl, 2-(Phenoxyethoxy-)ethyl, Hydroxyethyl-1, Ethoxyethyl-1, Butoxyethyl-1, Ethoxyethoxyethyl-1, Acetoxybutoxyethyl-1, Hydroxypropyl-1, Ethoxypropyl-1, Butoxypropyl-1, Methoxyethoxy-propyl-1, Phenoxyethoxypropyl-1, Acetoxyethoxy-propyl-1, Benzyloxypropyl-1, 2-Hydroxypropyl-2, 2-Methoxypropyl-2, 2-Butoxypropyl-2, 2-Phenoxypropyl-2, 2-Hydroxyethoxypropyl-2, 2-Propoxyethoxy-propyl-2, 2-Phenoxyethoxypropyl-2, Methoxybutyl-1, Methoxyethoxybutyl-1, Benzyloxybutyl-1, 2-Ethoxybutyl-2, 2-Acetoxyethoxybutyl-2, 2-Phenoxybutyl-2, Hydroxy-i-butyl-1,Propoxy-i-butyl-1, Methoxy-ethoxy-i-butyl-1, Alloxy-i-butyl-1, Hydroxy-sek.-butyl-1, Ethoxy-sek.-butyl-1, Benzyloxy-sek.-butyl-1, Methoxybutoxy-sek.-butyl-1, Methoxypentyl-1, Propoxypentyl-1, Ethoxyethoxypentyl-1, 2-Ethoxypentyl-2, 2-Butoxyethoxypentyl-2, 2-Cycloethoxypentyl-2, 3-Methoxypentyl-3, 3-Butoxypentyl-3, 3-Methoxyethoxypentyl-3, 3-Propionyloxyethyl-pentyl-3, 3-Ethoxyheptyl-3, 3-Methoxyethoxyheptyl-3, Methoxy, Ethoxy, Propoxy, i-Propoxy, Butoxy, i-Butoxy, t-Butoxy, Pentoxy, Sek.-Pentoxy 2-Methylbutoxy, 3-Methylbutoxy, 2,2-Dimethylpropoxy, 2-Ethylbutoxy, 2-Methylpentoxy, 2-Ethylhexoxy, Methoxyethoxy, Ethoxyethoxy, Propoxyethoxy, Butoxyethoxy, Methoxybutoxy, Ethoxybutoxy, Alloxy, Phenoxy, Phenoxyethoxy, Cyclohexoxy, Cyclopentoxy, Benzyloxy, Methylamino, Ethylamino, n-Propylamino, i-Propylamino, n-Butylamino, i-Butylamino, n-Pentylamino, 2-Methylbutylamino, 3-Methylbutylamino, n-Hexylamino, i-Octylamino, Benzylamino, Phenethylamino, Cyclopentylamino, Allylamino, Phenylamino.

Beispiele für $Z^1$ sind

Methyl, Ethyl, n-Propyl, i-Propyl, n-Butyl, i-Butyl, Allyl, Methallyl, Phenyl, Cyclohexyl, Benzyl, Phenethyl, Cyanethyl, Hydroxyethyl, Methoxyethyl, Ethoxyethyl, Propoxyethyl, Butoxyethyl, Alloxyethyl, Phenoxyethyl, Benzyloxyethyl, Cyclohexoxyethyl, Methoxyethoxyethyl, Ethoxyethoxyethyl, Phenoxyethoxyethyl, Methoxycarbonylethoxyethyl, Acetoxyethyl, Propionyloxyethyl, Butyryloxyethyl, Benzoyloxyethyl, Acetoxyethoxyethyl, Methoxybutoxyethyl, Methoxycarbonylethyl, Ethoxycarbonylethyl, Butoxycarbonylethyl, Methoxyethoxycarbonylethyl, Hydroxybutoxycarbonylethyl, Phenoxycarbonylethyl, Phenoxyethoxycarbonylethyl, Benzyloxycarbonylethyl, 2-Hydroxy-3-methoxypropyl, 2-Hydroxy-3-butoxypropyl, 2-Hydroxy-3-phenoxypropyl, 2-Hydroxy-3-alloxypropyl, 2-Hydroxy-3-(methoxyethoxy)-propyl, 2,3-Diacetoxypropyl, 2-Acetoxy-3-methoxypropyl.

Ein sich von einer Diazokomponente der Thiazolreihe ableitender Rest D ist z.B. ein Thiazolyl-2-rest, der durch Nitro, Chlor, Brom, Cyan, Methylsulfonyl, Phenyl, Methyl, Ethyl, Alkoxycarbonyl mit 1 bis 2 C-Atomen im Alkoxyrest, Benzyloxycarbonyl, Phenoxycarbonyl, Alkyl- oder Dialkyl-aminocarbonyl mit 1 bis 4 C-Atomen in den Alkylresten mono- oder disubstituiert oder durch Phenylazo monosubstituiert sein kann, wobei der Phenylazorest seinerseits durch Chlor, Brom, Cyan oder Nitro mono- oder disubstituiert sein kann. Die Monosubstitution des Phenylazorestes erfolgt vorzugsweise in 4-Stellung, die Disubstitution vorzugsweise in 2,4-Stellung.

Ein sich von einer Diazokomponente der Thiadiazolreihe ableitender Rest D ist z.B. ein 1,3,4-Thiadiazolyl-2-Rest, der durch Alkyl mit 1 bis 4 C-Atomen, Phenyl, Benzyl, Methoxyethyl oder ein 1,2,4-Thiadiazolyl-5-rest, der durch Alkylthio mit 1 bis 4 C-Atomen, Benzyl-thio oder Methoxyethyl-thio substituiert ist.

Ein sich von einer Diazokomponente der Benzthiazolreihe ableitender Rest D ist z.B. der Benzthiazolyl-2-rest, der auch durch Methyl, Ethyl, Methoxy, Ethoxy, Chlor, Nitro mono- oder disubstituiert sein kann.

Ein sich von einer Diazokomponente der Benzisothiazolylreihe ableitender Rest D ist z.B. ein 1,2-Benzisothiazolyl-3-rest, der durch Nitro, Methylsulfonyl, Methoxycarbonyl, Chlor, Brom, Methyl, Ethyl, Methoxy oder Ethoxy mono- (insbesondere in 4, 5, 6 oder 7-Stellung) oder di- (insbesondere in 5 und 7-Stellung) substituiert sein kann.

Ein sich von einer Diazokomponente der Thiophenreihe ableitender Rest D ist z.B. ein Thienyl-(2)-rest, der durch Nitro, Cyan, Brom, Chlor, Methoxycarbonyl oder Ethoxycarbonyl substituiert ist.

Ein sich von einer Diazokomponente der Naphthalinreihe ableitender Rest D ist z.B. ein 1-Naphthylrest, der durch Nitro, Halogen, Phenylazo substituiert ist, wobei der Phenylazorest seinerseits durch Nitro, Cyan und/oder Halogen substituiert sein kann.

Ein sich von einer Kupplungskomponente der Naphthylenreihe ableitender Rest K ist das Naphthylen (-1,4), das auch durch Chlor, Brom, Methyl, Ethyl, Methoxy oder Ethoxy substituiert sein kann.

Ein sich von einer Kupplungskomponente der Pyridindiyl-2,5-Reihe ableitender Rest K ist z.B. das 6-Amino-4-methyl-3-cyan-pyridindiyl(2,5), oder das 4,6-Diamino-5-cyanpyridindiyl (-2,3), deren Aminogruppe z.B. durch Alkoxyalkyl, Hydroxyalkoxyalkyl, Phenoxyalkoxyalkyl, Acyloxy-alkoxyalkyl substituiert ist. Hierbei können die Alkyl-, Alkoxy-, Hydroxyalkoxyreste z.B. jeweils 1 bis 4 C-Atome und der Acyloxy-Rest 2 bis 5 C-Atome besitzen.

Die in Farbstoffen der Formel I enthaltenen Alkyl-, Alkenyl- und Alkoxy-Reste können geradkettig oder verzweigt sein. Die angegebene Zahl der Kohlenstoff-Atome bezieht sich, wie auch bei den Aryl- und Aryloxy-Resten, auf die unsubstituierten Reste. Vorzugsweise stellt D einen Rest der Formel II dar, wobei $X^1$, $X^2$ und $X^3$ insbesondere folgende Bedeutungen besitzen: $X^1$: Nitro, Cyan, Trifluormethyl, Methylsulfonyl, Phenylsulfonyl, Alkoxysulfonyl mit 1 bis 4 C-Atomen, das auch durch Alkoxy mit 1 bis 4 C-Atomen substituiert sein kann, Phenoxysulfonyl, Alkylcarbonyl mit 1 bis 4 C-Atomen, Benzoyl, wobei der Phenylrest auch durch Alkoxy mit 1 bis 4 C-Atomen, Halogen, insbesondere Chlor oder vorzugsweise durch Alkyl mit 1 bis 4 C-Atomen oder Nitro substituiert sein kann, Alkoxycarbonyl mit 1 bis 4 C-Atomen im Alkoxyrest, der auch

durch Alkoxy mit 1 bis 4 C-Atomen, Alkylcarbonyloxy mit 1 bis 4 C-Atomen, insbesondere aber durch Phenyl, Hydroxy, oder Methoxy substituiert sein kann, Phenoxycarbonyl, Phenylazo, das durch Nitro, Chlor, Brom, Cyan, Methyl mono- oder disubstituiert sein kann; $X^2$ und $X^3$ bedeuten unabhängig voneinander Wasserstoff, Chlor, Brom, Methyl, Ethyl, Methoxy, Ethoxy, Phenyl, Phenoxy oder einen der für $X^1$ angegebenen Reste mit Ausnahme von Phenylazo.

Bevorzugter Substituent für die Alkylgruppen der für $X^1$ stehenden Alkyl- und Dialkylaminocarbonylreste und Alkyl- und Dialkyl-aminosulfonylreste ist Methoxy und Ethoxy.

Bevorzugte Reste K in den erfindungsgemäß einzusetzenden Farbstoffen entsprechen der Formel III

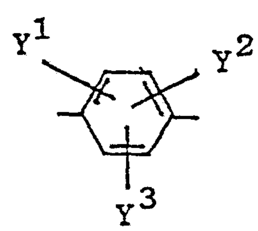

(III) worin

$Y^1$ Alkyl mit 1 bis 4 C-Atomen, Alkoxy mit 1 bis 4 C-Atomen, das auch durch Phenyl, Phenoxy, Hydroxy, Alkoxy mit 1 bis 4 C-Atomen oder Alkylcarbonyloxy mit 1 bis 4 C-Atomen substituiert sein kann, Alkylcarbonylamino mit 1 bis 4 C-Atomen im Alkylrest, der auch durch Alkoxy mit 1 bis 4 C-Atomen oder Alkoxyalkoxy mit insgesamt 8 C-Atomen substituiert sein kann, Benzoylamino, Alkylsulfonylamino mit 1 bis 2 C-Atomen, Phenylsulfonylamino, Chlor oder Brom, $Y^2$ Wasserstoff, Chlor oder Brom, Alkyl mit 1 bis 4 C-Atomen, Alkoxy mit 1 bis 4 C-Atomen, das durch Phenyl, Phenoxy, Hydroxy, Alkoxy mit 1 bis 4 C-Atomen oder Alkylcarbonyloxy mit 1 bis 4 C-Atomen substituiert sein kann, $Y^3$ Wasserstoff, Alkyl mit 1 bis 4 C-Atomen bedeutet.

Z bedeutet vorzugsweise einen Rest der Formel VI

$$-C_rH_{2r}-(OC_pH_{2p})_n-H$$

worin r eine Zahl von 1 bis 8, p eine Zahl von 2 bis 4 und n Null oder 1, vorzugsweise Null ist, mit der Maßgabe, daß

die Sume r + np eine Zahl von 3 bis 8 ist, der gegebenenfalls durch Hydroxy, Chlor, Brom, Cyan, Alkoxy mit 1 bis 4 C-Atomen Cycloalkoxy mit 5 oder 6 C-Atomen, Alkylcarbonyloxy mit 2 bis 4 C-Atomen, Alkoxycarbonyl mit 2 bis 5 C-Atomen, Alkoxyalkoxycarbonyl mit 4 bis 9 C-Atomen, Hydroxyalkoxycarbonyl mit 3 bis 5 C-Atomen, oder durch gegebenenfalls im Phenylkern noch durch Methyl, Methoxy, Chlor, Brom oder Cyan mono- oder disubstituiertes Phenyl, Phenoxy, Benzoyloxy, Phenoxycarbonyl, Phenoxyalkoxycarbonyl mit 2 bis 4 C-Atomen in der aliphatischen Brücke, Phenalkoxycarbonyl mit 1 oder 2 C-Atomen in der aliphatischen Brücke monosubstituiert sein kann; Alkenyl mit 3 oder 4 C-Atomen; Cycloalkyl mit 5 oder 6 C-Atomen; Phenyl, das durch Chlor, Methyl oder Methoxy monosubstituiert sein kann; Alkoxy mit 1 bis 4 C-Atomen, dessen Kohlenstoffkette, sofern sie mindestens 3 C-Atome hat, im Mindestabstand von 2 C-Atomen vom Stickstoffatom durch Sauerstoff einfach unterbrochen sein kann und/oder durch Hydroxy, Chlor, Brom, Cyan, Alkenoxy oder durch gegebenenfalls im Phenylkern noch durch Methyl, Methoxy, Chlor, Brom oder Cyan mono- oder disubstituiertes Phenyl oder Phenoxy monosubstituiert sein kann; Phenoxy, dessen Phenylkern durch Chlor, Brom, Methyl oder Methoxy monosubstituiert sein kann; Alkylamino mit 1 bis 4 C-Atomen , dessen Kohlenstoffkette , sofern sie mindestens 3 C-Atome hat, im Mindestabstand von 2 C-Atomen vom Stickstoffatom durch Sauerstoff einfach unterbrochen sein kann und/oder durch Hydroxy, Chlor, Brom, Cyan, Alkenoxy oder durch gegebenenfalls im Phenylkern noch durch Methyl oder Methoxy, Chlor, Brom oder Cyan mono- oder disubstituiertes Phenyl oder Phenoxy monosubstituiert sein kann; Phenylamino, dessen Phenylkern durch Chlor, Brom, Methyl oder Methoxy monosubstituiert sein kann.

Bevorzugter Substituent für eine für Z stehende Alkylaminogruppe ist gegebenenfalls wie oben angegeben substituiertes Phenyl.

In für Z stehenden Alkyl-, Alkoxy- und Alkylaminogruppen ist ein eventuell vorhandener zweiter Substituent vorzugsweise eine Hydroxy-, Methoxy- oder Ethoxy-Gruppe.

Besonders bevorzugt für das erfindungsgemäße Verfahren sind Farbstoffe der Formel I, in denen Z Alkyl oder Alkoxyalkyl mit insgesamt 1 bis 8 C-Atomen, das durch Hydroxy, Chlor, Brom, Cyan, Alkylcarbonyloxy mit 2 bis 4 C-Atomen, Alkoxycarbonyl mit 2 bis 5 C-Atomen, Hydroxyalkoxycarbonyl mit 3 bis 5 C-Atomen, Phenyl oder Phenoxy, Benzoyloxy monosubstituiert sein kann und das zusätzlich zu den genannten Substituenten gegebenenfalls noch durch eine Hydroxygruppe substituiert sein kann; Alkenyl mit 2 bis 4, vorzugsweise 3 oder 4 C-Atomen; Cycloalkyl mit 5 oder 6 C-Atomen; Phenyl, das durch Chlor, Brom, Methyl oder Methoxy disubstituiert oder vorzugsweise monosubstituiert sein kann, bedeutet.

Besonders bevorzugt sind auch diejenigen erfindungsgemäßen Farbstoffe, in denen in $X^1$, $X^2$, $X^3$, $Y^1$, $Y^2$ und $Y^3$ enthaltene Alkyl- oder Phenylreste ihrerseits keine weiteren Substituenten tragen.

Es ist bekannt, synthetische hydrophobe Fasermaterialien zu färben und zu bedrucken unter Einsatz von Azofarbstoffen, die von wasserlöslich machenden Gruppen frei sind.

Die Färbung kann nach verschiedenen Methoden erfolgen. Es kann nach dem Carrier-Verfahren in Gegenwart von Fixierbeschleunigern bei Temperaturen von etwa 80 - 105°C, nach den HT-Verfahren bei Temperaturen von 110 - 140°C gefärbt werden. Bei dem HT-Verfahren wird die Färbung in druckfesten Färbeaggregaten unter dem Dampfdruck der Färbeflotte ausgeführt. Ferner kann nach dem Thermosolprozeß gearbeitet werden, bei dem die zu färbende Ware mit der Färbeflotte geklotzt wird und gegebenenfalls nach einer Zwischentrocknung, über erhitzte Walzen oder durch einen heißen Luft- oder Dampfstrom geleitet wird, wobei der Farbstoff in der Faser fixiert wird. Hierbei werden vornehmlich Temperaturen von 180 - 230°C zur Anwendung gebracht.

Zur Herstellung der Färbeflotten werden die erforderlichen Mengen der Dispersionsfarbstoffe in feiner Verteilung, vorzugsweise in Form flüssiger oder fester Farbstoffeinstellungen mit dem Färbemedium, vorzugsweise mit Wasser so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt.

Für den Textildruck werden die erforderlichen Mengen der Dispersionsfarbstoffe in feiner Verteilung, vorzugsweise in Form der flüssigen oder redispergierbaren festen Farbstoffeinstellungen zusammen mit Verdickungsmitteln wie z.B. Alkali-Alginaten oder dergleichen und gegebenenfalls weiteren Zusätzen wie z.B. Fixierbeschleunigern, Netzmitteln und Oxydationsmitteln zu Druckpasten verknetet.

Die Textilwaren werden mit diesen Druckpasten bedruckt und gegebenenfalls nach einer Zwischentrocknung einer Hitzebehandlung unterworfen, wobei Fixierung des Farbstoffs in der Faser eintritt.

Hierzu wird die bedruckte Ware in Gegenwart eines Carriers bei Temperaturen zwischen etwa 80 - 110°C oder auch in Abwesenheit eines Carriers bei etwa 110 - 180°C gedämpft oder auch nach dem sogenannten Thermofixierverfahren bei etwa 180-230°C behandelt.

Es war auch bereits bekannt, als von wasserlöslich machenden Gruppen freie Azofarbstoffe solche der Formel

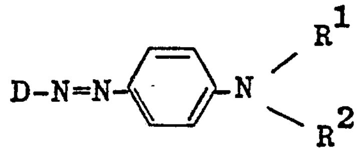

(IV)

einzusetzen, wobei D eine der üblichen Diazokomponenten ist und $R^1$ und $R^2$ Wasserstoff oder gegebenenfalls substituiertes Alkyl oder Aryl ist.

Es ist auch bekannt, daß die Farbstoffe in Bezug auf Farbtiefe, Ziehvermögen und spektraler Absorption günstiger werden, wenn die Reste $R^1$ und $R^2$ Alkylgruppen mittlerer Kettenlänge sind, was möglicherweise auf dem durch Hyperkonjugation zustandekommenden Elektronenangebot der Alkylgruppe zurückzuführen ist.

Daher wurden zum Colorieren hydrophober Fasermaterialien bislang neben Dispersionfarbstoffen anderer Struktur nur solche der Formel IV eingesetzt, die in der Kupplungskomponente mindestens einen starken Elektronendonator wie z.B. eine nicht acylierte Aminogruppe oder Hydroxygruppe aufweisen. Es sind auch bereits aus wissenschaftlichen Arbeiten einige Derivate des p-Alkanoylamino-azobenzols bekannt, die aber nicht für Färbezwecke eingesetzt wurden.
(vergl. Beilstein H16, Seiten 316-320; Jour. Chem. Soc. London Bd 81, S. 982; DRP 88013, Friedländer BD IV, S. 1020).

Die Application der Farbstoffe der Formel I nach dem erfindungsgemäßen Verfahren erfolgt in der an sich für das Färben und Bedrucken synthetischer hydrophober Fasermaterialien bekannten, oben angegebenen Weise.

Das erfindungsgemäße Verfahren liefert auf hydrophoben Fasermaterialien, z.B. aus Polyamid, Polyacryl-nitril, Cellulose-2 1/2-acetat, Cellulosetriacetat, Polyestern, die für sich allein oder im Gemisch mit anderen Faserarten, wie z.B. Baumwolle, natürlichen oder regenerierten Zellulosefasern oder Wolle vorliegen können,gelbe bis rotstichig blaue Färbungen und Drucke mit hoher Farbstärke und ausgezeichneten Echtheiten, insbesondere hoher Lichtechtheit, hoher Trockenhitzeplissier- und Trockenhitzefixierechtheit, pH-Beständigkeit, Alkalibeständigkeit, geringer Reduktionsempfindlichkeit. Die erfindungsgemäß einzusetzenden Farbstoffe der Formel I zeigen dabei eine geringe Temperaturempfindlichkeit, ein sehr gutes Thermomigrationsverhalten und gutes Aufbau- und Ausziehvermögen.

Technisch besonders vorteilhaft in Bezug auf Farbstoffausbeute, Ziehvermögen und Echtheit der Färbungen bzw. Drucke sind Mischungen aus zwei oder drei Farbstoffen der allgemeinen Formel (I). Derartige erfindungsgemäßen Farbstoffmischungen haben einen Gehalt von 10 bis 90% vorzugsweise 30 bis 70% eines jeweiligen Farbstoffs der Formel (I).

Die erfindungsgemäß einzusetzenden Farbstoffe der Formel (I), in denen D den Rest einer Diazokomponente der Thiazol-, Thiadiazol-, Benzthiazol-, Benzisothiazol-, Thiophen-Reihe bedeutet und solche, in denen K den Rest einer Kupplungskomponente der Pyridindiyl-2,5-, Pyridindiyl-2,3- oder Thiazoldiyl-2,5-Reihe, wobei Z und $Z^1$ die oben angegebenen Bedeutungen haben, sind neu.

Neu sind auch Farbstoffe der Formel I, in denen D einen Rest der Formel II

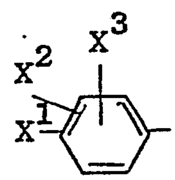

(II)

und K einen Rest der Formel III

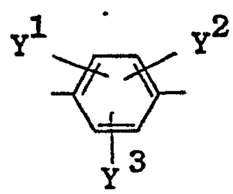

bedeutet, worin

$X^1$ Nitro, Cyan, Trifluormethyl, Alkylsulfonyl mit 1 bis 4 C-Atomen, phenylsulfonyl, das gegebenenfalls durch Methoxy, Methyl, Chlor, Brom, Nitro substituiert sein kann, Alkoxysulfonyl mit 1 bis 4 C-Atomen, das gegebenenfalls durch Alkoxy mit 1 bis 4 C-Atomen substituiert sein kann, Phenoxysulfonyl, das im Phenylrest gegebenenfalls durch Alkyl mit 1 bis 4 C-Atomen, Alkoxy mit 1 bis 4 C-Atomen, Nitro, Fluor, Chlor oder Brom substituiert sein kann, Alkylcarbonyl mit 1 bis 4 C-Atomen im Alkylrest,

Benzoyl, wobei der Phenylrest auch durch Alkyl mit 1 bis 4 C-Atomen, Alkoxy mit 1 bis 4 C-Atomen, Nitro, Fluor, Chlor oder Brom substituiert sein kann, Alkoxycarbonyl mit 1 bis 4 C-Atomen im Alkoxyrest, das gegebenenfalls durch Phenyl, Hydroxy, Alkoxy mit 1 bis 4 C-Atomen oder Alkylcarbonyloxy mit 1 bis 4 C-Atomen im Alkylrest substituiert sein kann, Phenoxycarbonyl, das im Phenylrest gegebenenfalls durch Alkyl mit 1 bis 4 C-Atomen, Alkoxy mit 1 bis 4 C-Atomen, Nitro, Fluor, Chlor oder Brom sustituiert sein kann, Aminocarbonyl, Aminosulfonyl, Alkyl-, Di-alkyl, Phenyl-alkyl- oder Phenyl-aminocarbonyl mit 1 bis 4 C-Atomen in den Alkylresten, Alkyl-, Dialkyl-, Phenyl-alkyl- oder Phenyl-aminosulfonyl mit 1 bis 4 C-Atomen in den Alkylresten, wobei die Alkylreste der Aminocarbonyl- und Aminosulfonylreste auch noch durch Hydroxy, Alkoxy mit 1 bis 4 C-Atomen oder Alkylcarbonyloxy mit 1 bis 4 C-Atomen im Alkylrest substituiert sein können oder gegebenenfalls unter Einschluß eines Sauerstoffatoms oder einer NH-Gruppe zusammen mit dem Stickstoffatom,an das sie gebunden sind,einen fünf- oder sechsgliedrigen Heterocyclus bilden oder Phenylazo, das durch Cyan, Nitro, Chlor, Brom, Trifluormethyl, Methyl, Ethyl, Methoxy, Ethoxy ein-, zwei- oder dreifach, vorzugsweise ein- oder zweifach substituiert sein kann, bedeuten,

$X^2$ und $X^3$ unabhängig voneinander Wasserstoff, Halogen, Alkyl mit 1 bis 4 C-Atomen, Alkoxy mit 1 bis 4 C-Atomen, Phenyl, Phenoxy bedeuten oder eine der unter $X^1$ angegebenen Bedeutungen mit Ausnahme von Phenylazo haben,

$Y^1$ Alkyl mit 1 bis 4 C-Atomen, Phenyl, Alkoxy mit 1 bis 4 C-Atomen, das auch durch Phenyl,Phenoxy, Hydroxy, Alkoxy mit 1 bis 4 C-Atomen oder Alkylcarbonyloxy mit 1 bis 4 C-Atomen im Alkylrest substituiert sein kann, Phenoxy, Alkylcarbonylamino mit 1 bis 4 C-Atomen in der Alkylgruppe, das auch durch Chlor, Brom, Hydroxy, Alkoxy mit 1 bis 4 C-Atomen, Alkoxyalkoxy mit 3 bis 8 C-Atomen oder Alkylcarbonyloxy mit 1 bis 4 C-Atomen substituiert sein kann, Benzoylamino, das durch Chlor Brom, Methyl, Ethyl, Methoxy oder Ethoxy substituiert sein

BAD ORIGINAL

kann, Alkylsulfonylamino mit 1 bis 4 C-Atomen in der Alkylgruppe, Phenylsulfonylamino, Halogen, $Y^2$ Wasserstoff, Halogen, Alkyl mit 1 bis 4 C-Atomen, Alkoxy mit 1 bis 4 C-Atomen, das durch Phenyl, Phenoxy, Alkoxy mit 1 bis 4 C-Atomen oder Alkylcarbonyloxy mit 1 bis 4 C-Atomen substituiert sein kann, Benzyloxy, Phenoxyethoxy, Hydroxyethoxy oder einen Rest-$O(CH_2)_nO(CH_2)_mCH_3$, worin n die Zahlen 2, 3 oder 4 und m die Zahlen O, 1, 2 oder 3 bedeuten, $Y^3$ Wasserstoff oder Alkyl mit 1 bis 4 C-Atomen bedeuten und

Z einen Rest der Formel VI: $-C_rH_{2r}-(-OC_pH_{2p})_n-H$

worin r eine Zahl von 1 bis 8, p eine Zahl von 2 bis 4 und n O, 1 oder 2, vorzugsweise O oder 1, ist, mit der Maßgabe, daß die Summe r + np eine Zahl von 3 bis 8 ist, der gegebenenfalls durch Hydroxy, Chlor, Brom, Cyan, Alkoxy mit 1 bis 4 C-Atomen Alkenoxy mit 3 oder 4 C-Atomen, Cycloalkoxy mit 5 oder 6 C-Atomen, Alkylcarbonyloxy mit 2 bis 4 C-Atomen, Alkoxycarbonyl mit 2 bis 5 C-Atomen, Alkoxyalkoxycarbonyl mit 4 bis 9 C-Atomen, Hydroxyalkoxycarbonyl mit 3 bis 5 C-Atomen, oder durch gegebenenfalls im Phenylkern noch durch Alkyl mit 1 bis 4 C-Atomen oder Alkoxy mit 1 bis 4 C-Atomen, vorzugsweise Methyl oder Methoxy, Chlor, Brom oder Cyan mono- oder disubstituiertes Phenyl, Phenoxy, Benzoyloxy, Phenoxycarbonyl, Phenoxyalkoxycarbonyl mit 2 bis 4 C-Atomen in der aliphatischen Brücke, Phenalkoxycarbonyl mit 1 oder 2 C-Atomen in der aliphatischen Brücke monosubstituiert sein kann und der zusätzlich zu den genannten Substituenten gegebenenfalls noch durch eine Hydroxygruppe substituiert sein kann; Alkenyl mit 2 bis 4, vorzugsweise 3 oder 4 C-Atomen; Cycloalkyl mit 5 oder 6 C-Atomen; Alkoxy mit 1 bis 8, vorzugsweise 1 bis 4 C-Atomen, dessen Kohlenstoffkette , sofern sie mindestens 3 C-Atome hat, jeweils im Abstand von mindestens 2 C-Atomen durch Sauerstoff ein- oder mehrfach, vorzugsweise einfach unterbrochen sein kann, wobei der Mindestabstand der Unterbrechung vom Stickstoffatom 2 C-Atome beträgt und/oder durch Hydroxy, Chlor, Brom, Cyan, Alkenoxy oder durch ggf. im Phenylkern noch durch Alkyl mit 1 bis 4 C-Atomen, Alkoxy mit 1 bis 4 C-Atomen, vorzugsweise Methyl oder Methoxy, Chlor, Brom oder

Cyan mono- oder disubstituiertes Phenyl oder Phenoxy disubstituiert oder vorzugsweise monosubstituiert sein kann; Alkenoxy mit 3 oder 4 C-Atomen; Cycloalkoxy mit 5 oder 6 C-Atomen; Phenoxy, dessen Phenylkern durch Alkyl mit 1 bis 4 C-Atomen, Alkoxy mit 1 bis 4 C-Atomen, Chlor oder Brom, vorzugsweise Methyl oder Methoxy, disubstituiert oder vorzugsweise monosubstituiert sein kann; Alkylamino mit 1 bis 8, vorzugsweise 1 bis 4 C-Atomen, dessen Kohlenstoffkette, sofern sie mindestens 3 C-Atome hat, im Mindestabstand von 2 C-Atomen vom Stickstoffatom durch Sauerstoff einfach unterbrochen sein kann und/oder durch Chlor, Brom, Cyan, Alkenoxy oder durch gegebenenfalls im Phenylkern noch durch Alkyl mit 1 bis 4 C-Atomen, Alkoxy mit 1 bis 4 C-Atomen, vorzugsweise Methyl oder Methoxy, Chlor, Brom oder Cyan mono- oder disubstituiertes Phenyl oder Phenoxy disubstituiert oder vorzugsweise monosubstituiert sein kann; Alkenylamino mit 3 oder 4 C-Atomen; Cycloalkylamino mit 5 oder 6 C-Atomen; Phenylamino, dessen Phenylkern durch Alkyl mit 1 bis 4 C-Atomen, Alkoxy mit 1 bis 4 C-Atomen, Chlor oder Brom, vorzugsweise Methyl oder Methoxy, disubstituiert oder vorzugsweise monosubstituiert sein kann, und, sofern keines der Symbole $Y^1$, $Y^2$ und $Y^3$ für Wasserstoff steht, auch noch Methyl oder Phenyl, das durch Alkyl mit 1 bis 4 C-Atomen, Alkoxy mit 1 bis 4 C-Atomen, Chlor oder Brom, vorzugsweise Methyl oder Methoxy, disubstituiert oder vorzugsweise monosubstituiert sein kann, bedeutet.

Besonders bevorzugt sind auch diejenigen erfindungsgemäßen Farbstoffe, in denen in $X^1$, $X^2$, $X^3$, $Y^1$, $Y^2$ und $Y^3$ enthaltene Alkyl- oder Phenylreste ihrerseits keine weiteren Substituenten tragen.

Die erfindungsgemäßen Farbstoffe können dadurch hergestellt werden, daß man einen Farbstoff V

$$\begin{array}{c} \phantom{D-N=N-K-}Z^1 \\ \phantom{D-N=N-K-}| \\ D-N=N-K-N-H \end{array} \qquad (V)$$

BAD ORIGINAL

mit acylierenden Mitteln, die den Rest -CO-Z einführen, umsetzt. Derartige acylierende Mittel sind z.B. Säurehalogenide insbesondere Säurechloride und -bromide, Säureanhydride und Ester. Für den Fall, daß Z eine Alkylamino- oder Phenylaminogruppe bedeutet, wird als acylierendes Mittel das entsprechende Isocyanat eingesetzt. Für den Fall, daß Z ein Alkoxy- oder Phenoxygruppe bedeutet, wird als acylierendes Mittel das entsprechende Carbonat, oder der entsprechende Chlorameisensäureester eingesetzt. Die benötigten Ausgangsfarbstoffe können in an sich bekannter Weise durch Diazotierung einer Diazokomponente $D-NH_2$ und anschließende Kupplung auf eine Kupplungskomponente $K-NHZ^1$ hergestellt werden. Die Acylierung des Farbstoffs V mit dem Acylierungsmittel, das den Rest -CO-Z einführt, kann bei Normal- oder erhöhter Temperatur in Abwesenheit oder vorzugsweise in Anwesenheit eines Lösungsmittels durchgeführt werden. Geeignete Lösungsmittel sind z.B. Carbonsäuren, wie Essigsäure, Propionsäure oder Buttersäure. Dabei ist es vorteilhaft bei z.B. einer Acetylierung Essigsäure und bei z.B. einer Propionylierung Propionsäure einzusetzen, da z. B. bei einer Acetylierung in Propionsäure auch propionyliertes Produkt entstehen kann.

Weitere geeignete Lösungsmittel sind z.B. Pyridin, Chlorkohlenwasserstoffe wie Methylenchlorid, Ethylenchlorid oder Tetrachlorethan und Aromaten wie Toluol, Xylol, Chlorbenzol, o-Dichlorbenzol und Nitrobenzol.

Die Temperatur kann bei der Acylierung $0^\circ C$ bis zur Rückflußtemperatur des verwendeten Lösungsmittel betragen. (Gegebenenfalls kann auch überschüssiges Acylierungsmittel als Lösungsmittel dienen). Normalerweise beträgt die Temperatur bei der Acylierung $0^\circ$ bis $200^\circ C$, vorzugsweise 20 bis $150^\circ C$. Während der Acylierung, die normalerweise in 5 Minuten bis 2 Stunden beendet ist, wird zweckmäßigerweise gerührt. In manchen Fällen ist bei der Acylierung eine Kühlung erforderlich.

Acylierungsmittel, die den Rest -CO-Z einführen, sind bekannt bzw. können nach den bekannten Vorschriften zur Herstellung

von Säurechloriden, Säurebromiden, Säureanhydriden, Isocyanaten, Carbonaten oder Chlorameisensäureestern leicht hergestellt werden.

Die erfindungsgemäßen Farbstoffe können auch dadurch hergestellt werden, daß man ein Amin der Formel $D\text{-}NH_2$ diazotiert und auf eine Kupplungskomponente der Formel $K\text{-}N(Z^1)COZ$ kuppelt. Geeignet hierfür sind Amine, die sehr reaktive Diazoniumverbindungen liefern, wie z.B. 2-Amino-5-nitrothiazol, 3-Amino -5-nitrobenzisothiazol, 2-Cyan-4-nitro-6-bromanilin und 2-Cyan-4-nitro-6-chloranilin. Geeignete Kupplungskomponente sind solche, in denen K z.B. Naphthyl-1 oder 2,5-Dimethoxyphenyl bedeutet, also Kupplungskomponenten mit elektronenreichem aromatischem Kern. Die Diazotierung erfolgt nach an sich bekanntem Verfahren in Schwefelsäure, Salzsäure oder aliphatischen Carbonsäuren, wie z.B. Essigsäure durch Einwirkung von Salpetriger Säure oder Nitrosonium-Ionen bildenden Systemen. Die Kupplung erfolgt zweckmäßigerweise in Salzsäure, Schwefelsäure, aliphatischen Carbonsäuren wie z.B. Essigsäure oder in aliphatischen Alkoholen, vorzugsweise in aliphatischen Alkoholen, die sich in Wasser nur begrenzt lösen, wie z.B. n-Butanol, in Gegenwart von Wasser. Zur Vervollständigung der Reaktion wird zweckmäßigerweise zum Schluß mit Basen, wie z.B. Alkaliacetat, auf einen Wert von 3 bis 6 gepuffert.

Technisch besonders vorteilhaft in Bezug auf Farbstoffausbeute, Ziehvermögen und Echtheit der Färbungen bzw. Drucke sind Mischungen von zwei oder drei Farbstoffen der allgemeinen Formel (I). Derartige erfindungsgemäßen Farbstoffsmischungen haben einen Gehalt von 10 bis 90%, vorzugsweise 30 bis 70%, eines jeweiligen Farbstoffs der Formel (I). Derartige erfindungsgemäße Mischungen können dadurch hergestellt werden, daß man zwei oder drei Farbstoffe der Formel (IV) mit acylierenden Mitteln, die den Rest -CO-Z einführen, umsetzt. Vorzugsweise wird dabei ein Farbstoff der Formel (IV) gleichzeitig oder nacheinander mit zwei oder drei verschiedenen acylierenden Mitteln umgesetzt.

Die erfindungsgemäßen Mischungen können auch dadurch hergestellt werden, daß man zwei oder drei Amine der Formel D-$NH_2$ diazotiert und auf zwei oder drei Kupplungskomponenten der Formel K-N($Z^1$) COZ kuppelt. Beispielsweise wird dabei ein Amin der Formel D-$NH_2$ auf zwei oder drei Kupplungskomponenten der Formel K-N($Z^1$)COZ gekuppelt, wobei sich vorzugsweise diese Kupplungskomponenten nur im Rest Z unterschieden.

Die erfindungsgemäßen Farbstoffe eignen sich hervorragend zum Färben und Bedrucken von hydrophoben Fasermaterialien, z.B. aus Polyamid, Polyacryl-nitril, Cellulose-2 1/2-acetat, Cellulosetriacetat, Polyestern. Sie werden auf diese Materialien nach den üblichen Färbe- und Druckverfahren appliziert und liefern hierbei gelbe bis rotstichig blaue Färbungen und Drucke mit hoher Farbstärke und ausgezeichneten Echtheiten, insbesondere hoher Lichtechtheit, hoher Trockenhitzeplissier- und Trockenhitzefixierechtheit, pH-Beständigkeit, Alkalibeständigkeit, geringer Reduktionsempfindlichkeit und Temperaturempfindlichkeit, sehr guten Thermomigrationsverhalten und gutem Aufbau- und Ausziehvermögen.

Hydrophobe Fasermaterialien im Sinne der vorliegenden Erfindung sind solche Materialien, insbesondere Textilmaterialien, die aus synthetischen, hydrophoben Fasern bestehen, oder sie in Mischung mit anderen Fasern, wie z.B. Zellulose oder Wolle enthalten. Synthetische hydrophobe Fasern sind z.B. solche aus Polyamid, Polyacryl-nitril, Cellulose-2 1/2-acetat, Cellulosetriacetat und insbesondere aus Polyestern, vorzugsweise Polyglycolterephthalat.

Beispiel 1

a) 4-Nitranilin wird in der üblichen Weise diazotiert und auf o-Anisidin gekuppelt. 27,2 g des so erhaltenen Produkts werden in 300 ml Eisessig bei 100°C mit 15,3 g Acetanhydrid versetzt und 30 Minuten bei 100°C gerührt. Dann wird das Reaktionsgemisch auf Eiswasser gefällt, abgesaugt, mit Wasser gewaschen und getrocknet. Man erhält 29,0 g eines goldgelben Pulvers von Schmelzpunkt 183 bis 184°C.

b) 1,0 g des nach 1a) erhaltenen feindispergierten Farbstoffs der Formel

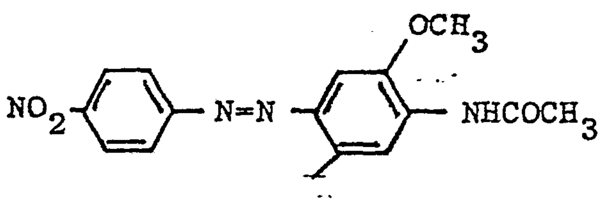

werden in 2000 g Wasser eingerührt. Es wird mit Essigsäure auf einen pH-Wert von 5 bis 6 eingestellt und mit 4,0 g Ammoniumsulfat und 2,0 g eines handelsüblichen Dispergiermittels auf Basis eines Naphthalinsulfonsäure-Formaldehyd-Kondensats versetzt. In die so erhaltene Färbeflotte bringt man 100 g eines Polyester-gewebes auf Basis Polyäthylenglykolterephthalat ein und färbt 1 1/2 Stunden bei 130°C. Nach anschließendem Spülen, reduktivem Nachbehandeln mit einer 0,2 %igen alkalischen Natriumdithionitlösung während 15 Minuten bei 70 bis 80°C, Spülen und Trocknen erhält man eine farbstarke goldgelbe Färbung mit sehr guten coloristischen Eigenschaften, insbesondere einer sehr guten Lichtechtheit.

Beispiel 2

a) 2,4-Dinitranilin wird in der üblichen Weise diazotiert und auf Aminohydrochinondimethyläther gekuppelt. 27,2g des so erhaltenen Produkts werden in 200 ml Pyridin unter Kühlung bei Raumtemperatur mit 11,1g Propionylchlorid versetzt und 30 Minuten bei Raumtemperatur gerührt. Zur Vervollständigung der Reaktion wird anschließend auf 80°C erwärmt. Man läßt abkühlen, gießt auf Eis/Salzsäure, saugt ab, wäscht mit Wasser, 0,5 n Salzsäure und wieder mit Wasser und

trocknet. Es werden 36,0 g eines roten Pulvers vom Schmelzpunkt 198 bis 200°C erhalten.

b) 30,0 g des nach 2a) erhaltenen Farbstoffs der Formel

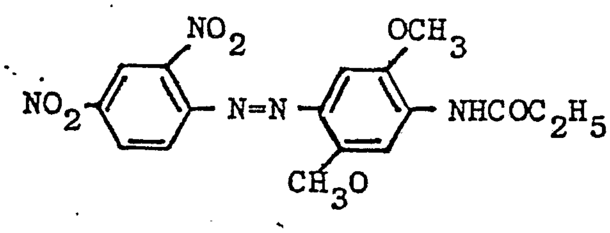

werden in feiner Verteilung einer Druckpaste, die 45,0 g Johannisbrotkernmehl, 6,0 g 3-nitrobenzol-sulfonsaures Natrium und 3,0 g Zitronensäure auf 1000 g enthält, einverleibt. Mit dieser Druckpaste erhält man auf einem Polyestergewebe nach dem Bedrucken, Trocknen und Fixieren im Thermofixierrahmen während 45 sec. bei 215°C, Spülen und Fertigstellung, wie im Beispiel 1 beschrieben, einen farbstarken roten Druck von sehr guten coloristischen Eigenschaften, insbesondere einer sehr guten Licht- und Trockenhitzeplissier- und Trockenhitzefixierechtheit.

Wird Triacetat mit der oben verwendeten Druckpaste bedruckt, das bedruckte Gewebe nach dem Trocknen 15 Minuten bei 1,5 atü Dampfdruck gedämpft, gespült, geseift, erneut gespült und getrocknet, so erhält man einen farbstarken roten Druck von sehr guten coloristischen Eigenschaften.

<u>Beispiel 3</u>

100 g (0,1 Mol) des Färbesalzes der Formel

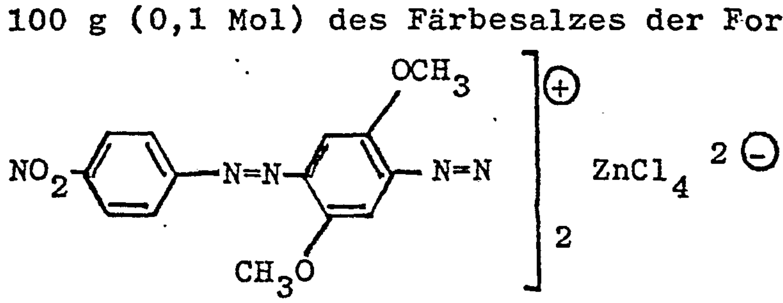

werden bei Raumtemperatur innerhalb 30 Minuten in eine Lösung von 11,8 g m-Toluidin in 800 ml Wasser und 500 ml Eisessig eingetragen. Nach beendeter Kupplung wird abgesaugt, mit 40 %iger Essigsäure und anschließend mit Wasser nachgewaschen und getrocknet.

21,0 g des so erhaltenen Produkts der Formel

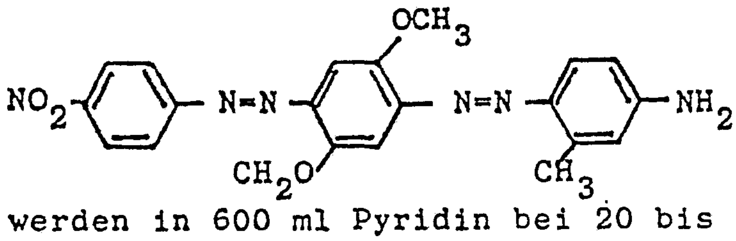

werden in 600 ml Pyridin bei 20 bis 50°C mit 4,7 g Acetylchlorid umgesetzt. Das Umsetzungsprodukt wird auf Eis/Salzsäure gefällt, abgesaugt, mit Wasser, 0,5 n Salzsäure und wieder mit Wasser gewaschen und getrocknet. Man erhält 20,5 g des Farbstoffs der Formel

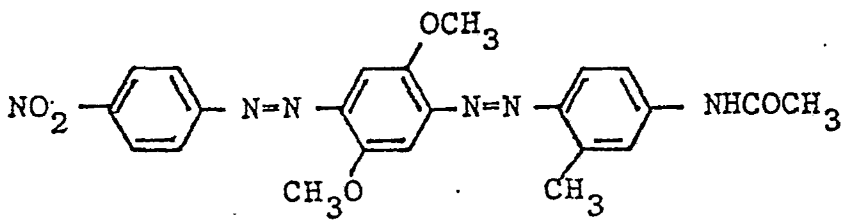

der bei 215°C schmilzt und Polyester in roten Tönen von sehr guten Licht- und Trockenhitzeplissier- und Trockenhitzefixierechtheiten färbt.

Analog zu den vorstehenden Beispielen wurden die in den nachfolgenden Tabellen angegebenen Farbstoffe hergestellt.

Isoalkylreste sind durch vor- oder nachgestelltes i, sekundäre Alkylreste durch vor- oder nachgestelltes sec., und tertiäre Alkylreste durch vor- oder nachgestelltes tert. gekennzeichnet. In den Tabellen sind in der Spalte "N" die Farbtöne mit folgenden Ziffern bezeichnet:

goldgelb = 1; orange = 2; scharlach = 3;
gelbbraun = 4; braun = 5; rot = 6,
rubin = 7; rotviolett = 8; violett = 9;
rotbraun = 10.

TABELLE I

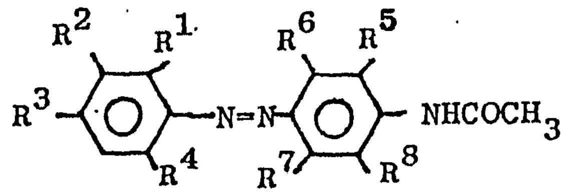

| Nr. | $R^1$ | $R^2$ | $R^3$ | $R^4$ | $R^5$ | $R^6$ | $R^7$ | $R^8$ | N |
|---|---|---|---|---|---|---|---|---|---|
| 1 | H | H | $NO_2$ | H | H | H | $CH_3$ | H | 1 |
| 2 | H | H | $NO_2$ | H | H | H | $OCH_3$ | H | 1 |
| 3 | H | H | $NO_2$ | H | $CH_3$ | H | H | Cl | 1 |
| 4 | H | H | $NO_2$ | H | $CH_3$ | H | Cl | H | 1 |
| 5 | H | H | $NO_2$ | H | $CH_3$ | Cl | H | H | 1 |
| 6 | H | H | $NO_2$ | H | $CH_3$ | $CH_3$ | H | H | 1 |
| 7 | H | H | $NO_2$ | H | $CH_3$ | H | H | $CH_3$ | 1 |
| 8 | H | H | $NO_2$ | H | $CH_3$ | Cl | H | $CH_3$ | 1 |
| 9 | H | H | $NO_2$ | H | H | $CH_3$ | $CH_3$ | H | 1 |
| 10 | H | H | $NO_2$ | H | $CH_3$ | H | $CH_3$ | H | 1 |
| 11 | H | H | $NO_2$ | H | $OCH_3$ | H | H | H | 1 |
| 12 | H | H | $NO_2$ | H | $O(CH_2)_2OCH_3$ | H | H | H | 1 |
| 13 | H | H | $NO_2$ | H | $OCH_3$ | H | Cl | H | 2 |
| 14 | H | H | $NO_2$ | H | $OC_2H_5$ | Cl | Cl | H | 1 |
| 15 | H | H | $NO_2$ | H | H | H | $OCH_3$ | H | 1 |
| 16 | H | H | $NO_2$ | H | $OCH_3$ | H | $CH_3$ | H | 2 |
| 17 | H | H | $NO_2$ | H | $OCH_3$ | $CH_3$ | $CH_3$ | H | 2 |
| 18 | H | H | $NO_2$ | H | $OCH_3$ | H | $OCH_3$ | H | 2 |
| 19 | H | H | $NO_2$ | H | $NHCOCH_3$ | H | H | H | 2 |
| 20 | H | H | $NO_2$ | H | H | H | $NHCOCH_3$ | H | 2 |
| 21 | H | H | $NO_2$ | H | Cl | H | $NHCOC_2H_5$ | H | 2 |

TABELLE I (Fortsetzung)

| Nr. | $R^1$ | $R^2$ | $R^3$ | $R^4$ | $R^5$ | $R^6$ | $R^7$ | $R^8$ | N |
|---|---|---|---|---|---|---|---|---|---|
| 22 | H | H | $NO_2$ | H | $OCH_3$ | H | $NHCOCH_3$ | H | 3 |
| 23 | H | H | $CF_3$ | H | $OC_2H_5$ | H | H | H | 1 |
| 24 | H | H | $CF_3$ | H | $OC_2H_5$ | H | $OC_2H_5$ | H | 2 |
| 25 | H | H | CN | H | $C_2H_5$ | H | H | H | 1 |
| 26 | H | H | CN | H | $O(CH_2)_2OH$ | H | Cl | H | 2 |
| 27 | H | H | $COOCH_3$ | H | H | H | $OC_3H_7$(n) | H | 1 |
| 28 | H | H | $COOC_3H_7$(n) | H | $OC_2H_5$ | H | $CH_3$ | H | 2 |
| 29 | H | H | $COO(CH_2)_2OCH_3$ | H | H | H | $NHCOC_4H_9$ | H | 2 |
| 30 | H | H | $COOC_6H_5$ | H | $C_6H_5$ | H | H | H | 1 |
| 31 | H | H | $COOCH_2C_6H_5$ | H | $C_4H_9$(i) | H | H | H | 1 |
| 32 | H | H | $CON(CH_3)_2$ | H | $OC_3H_7$(i) | H | Cl | H | 1 |
| 33 | H | H |  | H | $OC_3H_7$(n) | H | $OC_3H_7$(n) | H | 4 |
| 34 | H | H | $SO_2CH_3$ | H | $OC_6H_5$ | H | Cl | H | 4 |
| 35 | H | H | $SO_2OC_6H_{11}$ | H | $C_2H_5$ | H | NHCO-$C_3H_7$(i) | H | 5 |
| 36 | H | H | $SO_2N(CH_3)C_6H_5$ | H | $O(CH_2)_2OCH_3$ | H | H | H | 1 |
| 37 | H | H | $COCH_3$ | H | $OC_4H_7$ | H | $CH_3$ | H | 2 |
| 38 | H | H | $COC_3H_7$(n) | H | H | H | $NHCOC_2H_5$ | H | 2 |
| 39 | H | H | $COC_6H_5$ | H | $O(CH_2)_2OH$ | H | $O(CH_2)_2OH$ | H | 2 |
| 40 | H | H | $SO_2C_6H_5$ | H | $OCH_3$ | $CH_3$ | $CH_3$ | H | 5 |
| 41 | $CH_3$ | H | $NO_2$ | H | $OCH_3$ | H | $OCH_3$ | H | 2 |
| 42 | $CH_3$ | H | $NO_2$ | H | H | H | $C_2H_5$ | H | 1 |
| 43 | $OCH_3$ | H | $NO_2$ | H | $OC_2H_5$ | H | $OC_2H_5$ | H | 2 |

T A B E L L E I (Fortsetzung)

| Nr. | $R^1$ | $R^2$ | $R^3$ | $R^4$ | $R^5$ | $R^6$ | $R^7$ | $R^8$ | N |
|---|---|---|---|---|---|---|---|---|---|
| 44 | Cl | H | $SO_2CH_3$ | H | $OC_6H_{13}$ | H | $OC_6H_{13}$ | H | 2 |
| 45 | $SO_2CH_3$ | H | $NO_2$ | H | $OC_2C_6H_5$ | H | $CH_3$ | H | 2 |
| 46 | $NO_2$ | H | $SO_2C_6H_5$ | H | $CH_3$ | H | $NHCOC_5H_{11}$ | H | 6 |
| 47 | $COOC_3H_7$(n) | H | $NO_2$ | H | Cl | H | $NHSO_2C_2H_5$ | H | 3 |
| 48 | H | $COOCH_3$ | $NO_2$ | H | $OC_2H_5$ | H | Cl | H | 5 |
| 49 | $NO_2$ | H | $COO(CH_2)_2OH$ | H | $C_2H_5$ | H | $C_2H_5$ | H | 4 |
| 50 | $NO_2$ | H | $COOCH_2C_6H_5$ | H | $OCH_3$ | $CH_3$ | H | $CH_3$ | 3 |
| 51 | $NO_2$ | H | $CON(C_2H_5)_2$ | H | $CH_3$ | H | H | $CH_3$ | 2 |
| 52 | $SO_2O-C_4H_9$(n) | H | $NO_2$ | H | H | H | $NHCOCH_3$ | H | 2 |
| 53 | Cl | H | $SO_2OC_6H_{11}$ | H | $CH_3$ | H | $NHCOCH_2OCH_3$ | H | 3 |
| 54 | H | Cl | $SO_2O(CH_2)_2OH$ | Cl | Cl | H | $NHCO(CH_2)_2OC_2H_5$ | H | 3 |
| 55 | $NO_2$ | H | $SO_2OCH_3$ | H | $C_2H_5$ | H | $C_2H_5$ | H | 2 |
| 56 | $CH_3$ | H | $SO_2OC_6H_5$ | Cl | $OC_4H_9$ | H | $CH_3$ | H | 2 |
| 57 | $CH_3$ | H | $SO_2OC_4H_3$ | $NO_2$ | $C_3H_7$ | H | H | H | 1 |
| 58 | Cl | H | $COCH_3$ | H | H | H | $OC_4H_9$ | H | 1 |
| 59 | Cl | H | $COC_3H_7$(i) | H | $C_3H_7$ | H | Cl | H | 1 |
| 60 | Br | H | $COC_2H_5$ | H | $O(CH_2)_2OC_6H_5$ | H | $NHCOCH_2Cl$ | H | 3 |
| 61 | Cl | H | $CO-C_6H_4-4CH_3$ | H | $OCH_3$ | H | $C_3H_7$(i) | H | 5 |
| 62 | $NO_2$ | H | $COC_3H_7$ | H | | H | H | H | 1 |
| 63 | CN | H | $CO-C_6H_4-4CH(CH_3)_2$ | H | $OCH_3$ | $CH_3$ | H | $CH_3$ | 3 |
| 64 | H | H | $CO-C_6H_4-4-NO_2$ | H | $CH_3$ | H | H | H | 1 |
| 65 | CN | H | $SO_2CH_3$ | H | $OC_2H_5$ | H | $OC_2H_5$ | H | 6 |
| 66 | Br | H | $SO_2C_6H_5$ | H | $C_2H_5$ | H | Cl | H | 2 |

TABELLE I (Fortsetzung)

| Nr. | $R^1$ | $R^2$ | $R^3$ | $R^4$ | $R^5$ | $R^6$ | $R^7$ | $R^8$ | N |
|---|---|---|---|---|---|---|---|---|---|
| 67 | Cl | H | $NO_2$ | H | $OCH_3$ | H | $CH_3$ | H | 5 |
| 68 | Cl | H | $NO_2$ | H | $OCH_3$ | H | $OCH_3$ | H | 3 |
| 69 | Cl | H | $NO_2$ | H | $OCH_3$ | H | $NHCOCH_3$ | H | 6 |
| 70 | Cl | H | $NO_2$ | H | $OC_4H_9$(i) | H | H | H | 2 |
| 71 | Br | H | $NO_2$ | H | O-$C_4H_9$(n) | H | Cl | H | 2 |
| 72 | Br | H | $NO_2$ | H | Cl | H | $NHSO_2CH_3$ | H | 3 |
| 73 | Br | H | $NO_2$ | H | H | H | $NHCOC_2H_5$ | H | 2 |
| 74 | $NO_2$ | H | $NO_2$ | H | $OCH_3$ | H | $OCH_3$ | H | 6 |
| 75 | $NO_2$ | H | $NO_2$ | H | $OCH_3$ | H | $CH_3$ | H | 5 |
| 76 | $NO_2$ | H | $NO_2$ | H | $CH_3$ | H | H | $CH_3$ | 4 |
| 77 | $NO_2$ | H | $NO_2$ | H | H | H | $NHCOC_5H_7$(i) | H | 3 |
| 78 | $NO_2$ | H | $NO_2$ | H | H | H | $OCH_2C_6H_5$ | H | 4 |
| 79 | $NO_2$ | H | $NO_2$ | H | $OC_2H_5$ | H | Cl | H | 3 |
| 80 | CN | H | $NO_2$ | H | $OC_2H_5$ | H | $OC_2H_5$ | H | 6 |
| 81 | CN | H | $NO_2$ | H | H | H | $NHSO_2C_6H_5$ | H | 3 |
| 82 | CN | H | $NO_2$ | H | $CH_3$ | H | $NHCOCH_3$ | H | 6 |
| 83 | CN | H | $NO_2$ | H | $OCH_2C_6H_5$ | H | H | H | 2 |
| 84 | Cl | H | $NO_2$ | Cl | $OC_3H_7$(i) | H | Cl | H | 5 |
| 85 | Cl | H | $NO_2$ | Cl | $OCH_3$ | H | $OCH_3$ | H | 5 |
| 86 | Br | H | $NO_2$ | Br | $C_3H_7$ | H | $C_3H_7$ | H | 4 |
| 87 | Br | H | $NO_2$ | Br | $C_2H_5$ | Cl | H | $C_2H_5$ | 4 |
| 88 | Br | H | $NO_2$ | Br | $OC_2H_5$ | H | $OC_2H_5$ | H | 5 |
| 89 | Br | H | $NO_2$ | Cl | $OCH_3$ | $CH_3$ | H | H | 4 |

TABELLE I (Fortsetzung)

| Nr. | $R^1$ | $R^2$ | $R^3$ | $R^4$ | $R^5$ | $R^6$ | $R^7$ | $R^8$ | N |
|---|---|---|---|---|---|---|---|---|---|
| 90 | $NO_2$ | H | CN | H | $O(CH_2)_2OH$ | H | $CH_3$ | H | 3 |
| 91 | $NO_2$ | H | CN | H | $OCH_3$ | Cl | Cl | H | 3 |
| 92 | CN | H | CN | H | H | H | $NHCOC_5H_{11}$ | H | 3 |
| 93 | H | $NO_2$ | CN | H | $O(CH_2)_2OC_6H_5$ | H | H | H | 2 |
| 94 | Cl | H | $NO_2$ | Cl | $OC_3H_7$ | H | H | Cl | 2 |
| 95 | Cl | H | $NO_2$ | Cl | $O(CH_2)_2OCH_3$ | H | H | $O(CH_2)_2OCH_3$ | 3 |
| 96 | $NO_2$ | H | $NO_2$ | Cl | $OCH_3$ | H | $OCH_3$ | H | 7 |
| 97 | $NO_2$ | H | $NO_2$ | Cl | $OC_2H_5$ | H | $CH_3$ | H | 5 |
| 98 | $NO_2$ | H | $NO_2$ | Br | $OC_2H_5$ | H | $NHCOC_2H_5$ | H | 7 |
| 99 | CN | H | $NO_2$ | CN | $OCH_3$ | H | $OCH_3$ | H | 8 |
| 100 | CN | H | $NO_2$ | CN | H | H | $NHCOC_2H_5$ | H | 8 |
| 101 | CN | H | $NO_2$ | CN | $O(CH_2)_2OCH_3$ | H | $NHCOCH_3$ | H | 9 |
| 102 | CN | H | $NO_2$ | Cl | $CH_3$ | H | H | H | 2 |
| 103 | CN | H | $NO_2$ | Cl | $OC_2H_5$ | H | H | H | 2 |
| 104 | CN | H | $NO_2$ | Cl | H | H | $C_2H_5$ | H | 2 |
| 105 | CN | H | $NO_2$ | Cl | $OCH_3$ | H | $OCH_3$ | H | 6 |
| 106 | CN | H | $NO_2$ | Br | $OCH_3$ | H | $CH_3$ | H | 3 |
| 107 | CN | H | $NO_2$ | Br | $CH_3$ | H | H | H | 2 |
| 108 | CN | H | $NO_2$ | Br | H | H | $O(CH_2)_2OC_2H_5$ | H | 2 |
| 109 | CN | H | CN | $NO_2$ | $OCH_3$ | H | $OCH_3$ | H | 8 |
| 110 | CN | H | CN | $NO_2$ | $CH_3$ | H | $NHCOCH_2OCH_3$ | H | 9 |
| 111 | CN | H | $NO_2$ | $SO_2CH_3$ | $O(CH_2)_2OH$ | H | $NHCOC_2H_5$ | H | 9 |
| 112 | CN | H | $NO_2$ | $NO_2$ | $CH_3$ | H | Cl | H | 2 |

TABELLE II

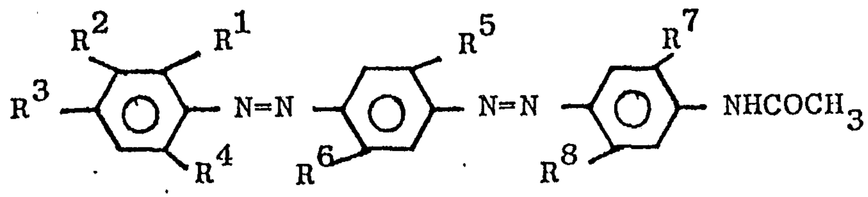

| Nr. | $R^1$ | $R^2$ | $R^3$ | $R^4$ | $R^5$ | $R^6$ | $R^7$ | $R^8$ | N |
|---|---|---|---|---|---|---|---|---|---|
| 1 | H | $NO_2$ | H | H | H | Cl | $CH_3$ | $CH_3$ | 2 |
| 2 | H | H | $NO_2$ | H | H | Cl | $OCH_3$ | $CH_3$ | 2 |
| 3 | $NO_2$ | H | $CH_3$ | H | $OCH_3$ | $CH_3$ | $OC_2H_5$ | $OC_2H_5$ | 6 |
| 4 | H | $NO_2$ | H | H | Cl | $NHCOCH_3$ | $CH_3$ | Cl | 3 |
| 5 | H | H | $NO_2$ | H | $OCH_3$ | $OCH_3$ | $C_2H_5$ | H | 10 |
| 6 | H | $NO_2$ | H | H | $OCH_3$ | $OCH_3$ | H | $OCH_2$ | 10 |
| 7 | Cl | H | $NO_2$ | H | $OCH_3$ | $OCH_3$ | H | $NHCOC_2H_5$ | 6 |
| 8 | $NO_2$ | H | $NO_2$ | H | $OCH_3$ | $OCH_3$ | $OCH_3$ | H | 3 |
| 9 | Cl | H | $NO_2$ | Cl | $OCH_3$ | $OCH_3$ | $C_2H_5$ | $C_2H_5$ | 5 |
| 10 | $NO_2$ | H | H | H | $OCH_3$ | $OCH_3$ | $CH_3$ | H | 2 |
| 11 | H | H | $NO_2$ | H | $OCH_3$ | $CH_3$ | $OCH_3$ | $CH_3$ | 5 |
| 12 | CN | H | $NO_2$ | H | $OCH_3$ | $CH_3$ | $OC_2H_5$ | Cl | 6 |
| 13 | Br | H | $NO_2$ | H | $OCH_3$ | $CH_3$ | H | $CH_3$ | 5 |
| 14 | H | H | $NO_2$ | H | $OCH_3$ | Cl | $CH_3$ | H | 5 |
| 15 | H | $NO_2$ | H | H | $OCH_3$ | Cl | H | $NHSO_2CH_3$ | 6 |
| 16 | H | H | $NO_2$ | H | $CH_3$ | $CH_3$ | $O(CH_2)_2OCH_3$ | $NHCOCH_3$ | 6 |
| 17 | CN | H | $NO_2$ | H | $CH_3$ | $CH_3$ | Cl | $NHSO_2C_6H_5$ | 6 |
| 18 | H | H | CN | H | H | $OCH_3$ | $CH_3$ | Cl | 2 |
| 19 | H | H | $NO_2$ | H | $OCH_3$ | H | $OCH_3$ | H | 2 |
| 20 | H | $NO_2$ | H | H | $CH_3$ | H | $CH_3$ | H | 1 |

TABELLE II (Fortsetzung)

| Nr. | $R^1$ | $R^2$ | $R^3$ | $R^4$ | $R^5$ | $R^6$ | $R^7$ | $R^8$ | N |
|---|---|---|---|---|---|---|---|---|---|
| 21 | $CH_3$ | H | $NO_2$ | H | H | $CH_3$ | $O(CH_2)_2OH$ | $O(CH_2)_2OH$ | 2 |
| 22 | H | $NO_2$ | H | H | H | H | $OC_3H_7$ | $CH_3$ | 2 |
| 23 | H | $NO_2$ | H | H | H | H | $OC_3H_7$ | $CH_3$ | 2 |
| 24 | H | H | H | H | $OCH_3$ | $OCH_3$ | $OCH_2$ | $OCH_3$ | 4 |
| 25 | H | H | $NO_2$ | H | CL | H | $CH_3$ | $CH_3$ | 2 |

TABELLE III

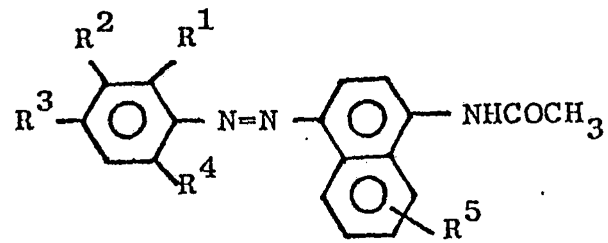

| Nr | $R^1$ | $R^2$ | $R^3$ | $R^4$ | $R^5$ | N |
|---|---|---|---|---|---|---|
| 1 | CN | H | CN | H | 2-Cl | 2 |
| 2 | H | $NO_2$ | $COOC_6H_5$ | H | $3-OC_2H_5$ | 4 |
| 3 | H | H | $NO_2$ | H | H | 2 |
| 4 | H | H | $SO_2CH_3$ | H | $5-OCH_3$ | 2 |
| 5 | Cl | H | $NO_2$ | H | H | 2 |
| 6 | $NO_2$ | H | $NO_2$ | H | H | 2 |
| 7 | CN | H | $NO_2$ | H | H | 2 |
| 8 | CN | H | $NO_2$ | Cl | H | 5 |
| 9 | H | H | $-N=N-C_6H_5$ | H | H | 2 |
| 10 | H | H | $-N=N-C_6H_4-3NO_2$ | H | $7-OC_2H_5$ | 2 |

TABELLE III (Fortsetzung)

| Nr. | $R^1$ | $R^2$ | $R^3$ | $R^4$ | $R^5$ | N |
|---|---|---|---|---|---|---|
| 11 | H | $OCH_3$ | $-N=N-C_6H_4-4NO_2$ | $OCH_3$ | H | 3 |
| 12 | H | $OCH_3$ | $-N=N-C_6H_4-3NO_2$ | $OCH_3$ | 2-Cl | 4 |
| 13 | H | $OCH_3$ | $-N=N-C_6H_2-2,6\text{-di-}Cl-4NO_2$ | $OCH_3$ | H | 5 |
| 14 | H | $CH_3$ | $-N=N-C_6H_4-4NO_2$ | $CH_3$ | $2-OCH_3$ | 5 |
| 15 | 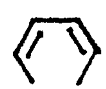 | $CH_3$ | $-N=N-C_6H_5$ | H | H | 5 |
| 16 | 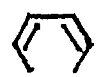 | $CH_3$ | $-N=N-C_6H_4-4NO_2$ | H | H | 2 |
| 17 | 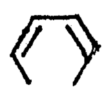 | $CH_3$ | $-N=N-C_6H_4-2CN$ | H | $2-OCH_3$ | 2 |

TABELLE IV

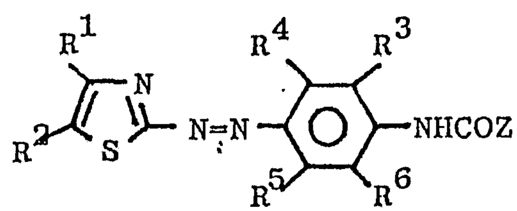

| Nr. | $R^1$ | $R^2$ | $R^3$ | $R^4$ | $R^5$ | $R^6$ | Z | N |
|---|---|---|---|---|---|---|---|---|
| 1 | H | $NO_2$ | $C_2H_5$ | H | H | H | $CH_3$ | 2 |
| 2 | H | $NO_2$ | $OCH_3$ | H | $NHCOCH_3$ | H | $OC_3H_7$ | 9 |
| 3 | H | $NO_2$ | $CH_3$ | H | H | $CH_3$ | $CH_2OC_6H_5$ | 2 |
| 4 | H | $NO_2$ | H | H | $NHCOC_3H_7$ | H | $C_6H_5$ | 7 |

TABELLE IV (Fortsetzung)

| Nr. | $R^1$ | $R^2$ | $R^3$ | $R^4$ | $R^5$ | $R^6$ | Z | N |
|---|---|---|---|---|---|---|---|---|
| 5 | H | $NO_2$ | H | H | $NHCOC_3C_7$ | H | $C_6H_5$ | 7 |
| 6 | H | $NO_2$ | $OCH_3$ | H | $OCH_3$ | H | $CH_2C_6H_5$ | 9 |
| 7 | H | Cl | H | H | $OC_2H_5$ | H | $NHC_6H_5$ | 2 |
| 8 | H | Cl | H | $CH_3$ | $CH_3$ | H | $(CH_2)_3OCOC_4H_9$ | 2 |
| 9 | H | Br | $O(CH_2)_2OH$ | H | $O(CH_2)_2OH$ | H | $C_6H_{13}$ | 3 |
| 10 | H | CN | $CH_3$ | H | $CH_3$ | H | $CH_2CN$ | 2 |
| 11 | $CH_3$ | Cl | $OCH_3$ | H | H | H | $OC_6H_5$ | 2 |
| 12 | $CH_3$ | $COOC_2H_5$ | H | H | $CH_3$ | H | $C(CH_3)CH_2OC_2H_5$ | 2 |
| 13 | $CH_3$ | $CON(CH_3)_2$ | Cl | H | $NHSO_2C_6H_5$ | H | $(CH_2)_4O(CH_2)_2OCH_3$ | 3 |
| 14 | $CH_3$ | CN | H | H | $NHCOC_2H_5$ | H | $C_4H_9$ | 6 |
| 15 | $CH_3$ | CN | $OC_2H_5$ | H | $OC_2H_5$ | H | $NHC_2H_5$ | 6 |
| 16 | $CH_3$ | $NO_2$ | $CH_3$ | H | Cl | H | $O(CH_2)_4OC_2H_5$ | 2 |
| 17 | $C_6H_5$ | H | H | H | $OC_3H_7$ | H | $CH_2OC_2H_5$ | 1 |
| 18 | $COOCH_2C_6H_5$ | H | $OC_2H_5$ | H | $NHCOC_2H_5$ | H | $C_2H_4-4CH_3$ | 2 |
| 19 | H | $-N=N-C_6H_4-4NO_2$ | $OC_3H_7(i)$ | H | $OC_3H_7(i)$ | H | $C_5H_{11}(i)$ | 9 |
| 20 | H | $-N=N-C_6H_3-2Cl-4NO_2$ | H | H | $C_2H_5$ | H | $C_2H_5$ | 3 |
| 21 | H | $NO_2$ | $OC_2H_5$ | H | Cl | H | $OC_6H_3-2,4(CH_3)_2$ | 9 |

TABELLE V

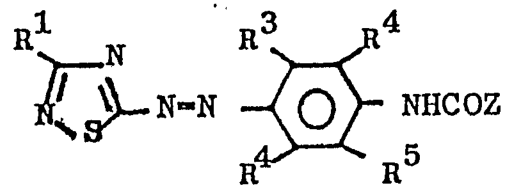

| Nr. | $R^1$ | $R^2$ | $R^3$ | $R^4$ | $R^5$ | Z | N |
|---|---|---|---|---|---|---|---|
| 1 | $CH_3$ | H | H | $CH_3$ | H | $(CH_2)_2OCOCH_3$ | 2 |
| 2 | $C_4H_9$ (n) | $OCH_3$ | H | $CH_3$ | H | $OC_4H_9$ | 3 |
| 3 | $C_6H_5CH_2$ | $OCH_3$ | $CH_3$ | H | $CH_3$ | $C_8H_{17}$(i) | 3 |
| 4 | $(CH_2)_2OCH_3$ | Cl | H | $NHCOC_2H_5$ | H | $CH_2C_2H_5$ | 6 |

TABELLE VI

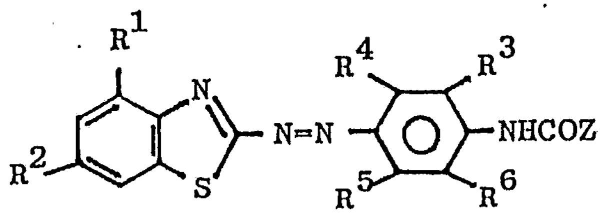

| Nr. | $R^1$ | $R^2$ | $R^3$ | $R^4$ | $R^5$ | $R^6$ | Z | N |
|---|---|---|---|---|---|---|---|---|
| 1 | H | H | H | H | $NHCOCH_3$ | H | $CH(C_2H_5)_2$ | 3 |
| 2 | H | H | H | H | $C_2H_5$ | H | $(CH_2)_3OC_2H_5$ | 2 |
| 3 | $CH_3$ | H | $OCH_3$ | H | $OCH_3$ | H | $OC_4H_5$ | 3 |
| 4 | $OCH_3$ | H | Cl | H | $NHCOC_2H_5$ | H | $NHC_6H_5$ | 6 |
| 5 | H | $OC_2H_5$ | $CH_3$ | H | $CH_3$ | H | $CH_2CN$ | 2 |
| 6 | Cl | H | $OCH_3$ | Cl | H | Cl | $C_4H_9$ | 5 |
| 7 | H | Cl | $CH_3$ | H | H | $CH_3$ | $CH_2OCOC_2H_5$ | 3 |
| 8 | Cl | Cl | $OCH_3$ | H | $NHCOC_3H_7$ | H | $OC_2H_5$ | 6 |
| 9 | H | $NO_2$ | $CH_3$ | H | H | H | $CH_2COOC_2H_5$ | 6 |
| 10 | H | $NO_2$ | $OC_2H_5$ | H | $OC_2H_5$ | H | $(CH_2)_2Cl$ | 9 |

TABELLE VII

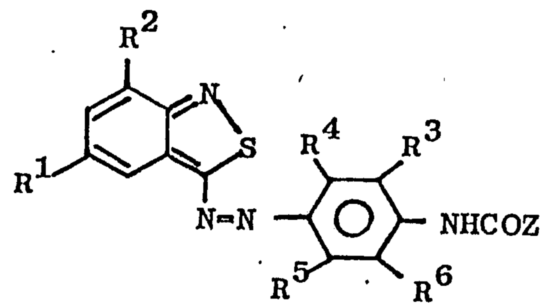

| Nr. | $R^1$ | $R^2$ | $R^3$ | $R^4$ | $R^5$ | $R^6$ | Z | N |
|---|---|---|---|---|---|---|---|---|
| 1 | $NO_2$ | H | H | H | $NHCOCH_3$ | H | $C_3H_7$ | 9 |
| 2 | $NO_2$ | H | $OCH_3$ | H | Cl | H | $CH_2OCH_2C_6H_5$ | 9 |
| 3 | $NO_2$ | Br | H | H | $OC_2H_5$ | H | $NHC_2H_5$ | 6 |
| 4 | H | $NO_2$ | $CH_3$ | H | Cl | H | $O(CH_2)_2OCH_3$ | 3 |

TABELLE VIII

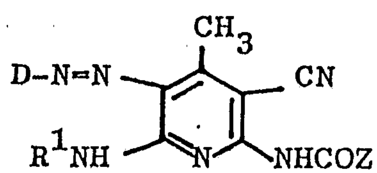

| Nr. | D | $R^1$ | Z | N |
|---|---|---|---|---|
| 1 | $2-CN-4-NO_2-C_6H_3-$ | $CH_3O(CH_2)_3-$ | $CH_3$ | 2 |
| 2 | $2-Cl-4-NO_2-C_6H_3-$ | $HO(CH_2)_4O(CH_3)_2-$ | $CH_2OC_6H_5$ | 2 |
| 3 | $4-NO_2-C_6H_4-$ | $C_6H_3O(CH_2)_2O(CH_4)_3-$ | $-C_6H_4-4CH_3$ | 1 |
| 4 | $2-CN-4-NO_2-6Cl-C_6H_2-$ | $C_3H_7COO(CH_2)_4O(CH_2)_3-$ | $-C_3H_7$ | 3 |

TABELLE IX

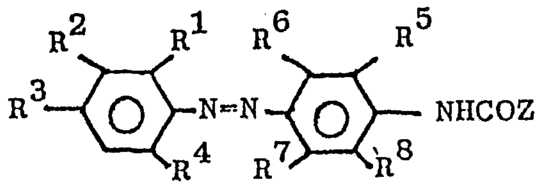

| Nr. | $R^1$ | $R^2$ | $R^3$ | $R^4$ | $R^5$ | $R^6$ | $R^7$ | $R^8$ | Z | N |
|---|---|---|---|---|---|---|---|---|---|---|
| 1 | H | H | $NO_2$ | H | H | H | $CH_3$ | H | $C_2H_5$ | 1 |
| 2 | H | H | $NO_2$ | H | $OCH_3$ | H | $CH_3$ | H | $C_2H_5$ | 2 |
| 3 | Cl | H | $NO_2$ | H | $OCH_3$ | H | $CH_3$ | H | $C_3H_7$ | 5 |
| 4 | $NO_2$ | H | $NO_2$ | H | $OC_2H_5$ | H | $OC_2H_5$ | H | $C_3H_7$ | 6 |
| 5 | Br | H | $NO_2$ | H | $O(CH_2)_2OCH_3$ | H | $NHCOC_2H_5$ | H | $C_3H_7$ | 6 |
| 6 | H | H | CN | H | H | H | $NHCOCH_3$ | H | $C_3H_7$ | 2 |
| 7 | CN | H | $NO_2$ | H | $OCH_3$ | H | $NHCOC_4H_9$ | H | $C_4H_9$ | 7 |
| 8 | H | $OCH_3$ | $-N{=}N-C_6H_4-4NO_2$ | $CH_3$ | $OC_2H_5$ | H | H | H | $C_4H_9$ | 5 |
| 9 | 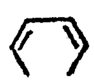 | | H | H | $C_2H_5$ | H | $C_2H_5$ | H | sec.$C_4H_9$ | 5 |
| 10 | $NO_2$ | H | $COOC_2H_5$ | H | $CH_3$ | H | H | $CH_3$ | $C(CH_3)CH_2OH$ | 1 |
| 11 | CN | H | $NO_2$ | Cl | H | H | $OCH_3$ | H | tert.$C_5H_{11}$ | 2 |
| 12 | Br | H | $NO_2$ | Br | $OCH_3$ | H | $OCH_3$ | H | i-Octyl | 4 |
| 13 | $CH_3$ | H | $NO_2$ | H | $OCH_3$ | H | $CH_3$ | H | $CH{=}CH_2$ | 2 |
| 14 | CN | H | $NO_2$ | H | Cl | H | $NHSO_2C_6H_5$ | H | $CH_2C_6H_5$ | 7 |
| 15 | Br | H | Cl | H | $OCH_3$ | $CH_3$ | $CH_3$ | H | $CH_2C_6H_4-4-CH_3$ | 5 |
| 16 | $OCH_3$ | H | $NO_2$ | H | $CH_3$ | H | Cl | H | $(CH_2)_2C_6H_5$ | 1 |
| 17 | H | H | $CF_3$ | H | $O(CH_2)_2OH$ | H | $CH_3$ | H | $CH_2-CN$ | 2 |
| 18 | $NO_2$ | H | $CON(C_2H_5)_2$ | H | $C_2H_5$ | H | H | H | $(CH_2)_2Cl$ | 1 |
| 19 | H | Cl | $NO_2$ | Cl | $OC_2H_5$ | H | H | H | $CH(Br)C_2H_5$ | 1 |
| 20 | H | $OCH_3$ | $-N{=}N-C_6H_4-4NO_2$ | $OCH_3$ | $CH_3$ | H | $CH_3$ | H | $CH_2OH$ | 7 |

T A B E L L E IX (Fortsetzung)

| Nr. | $R^1$ | $R^2$ | $R^3$ | $R^4$ | $R^5$ | $R^6$ | $R^7$ | $R^8$ | Z | N |
|---|---|---|---|---|---|---|---|---|---|---|
| 21 | H | H | $NO_2$ | H | H | H | $C_2H_5$ | H | $CH_2OCH_3$ | 1 |
| 22 | H | H | $COO(CH_2)_2OH$ | H | $OC_2H_7$ | H | $OC_3H_7$ | H | $CH_2OCH_3$ | 2 |
| 23 | CN | H | $NO_2$ | CN | $O(CH_2)_2OH$ | H | $O(CH_2)_2OH$ | H | $CH_2OC_2H_7$(i) | 9 |
| 24 | CN | H | $NO_2$ | Br | $OCH_2C_6H_5$ | H | $CH_3$ | H | $CH_2OC_4H_9$ | 2 |
| 25 | $NO_2$ | H | $NO_2$ | H | $OCH_3$ | H | $CH_3$ | H | $CH_2OC_8H_{17}$(i) | 5 |
| 26 | $NO_2$ | H | $SO_2C_6H_5$ | H | $OC_2H_5$ | H | Cl | H | $CH_2OCH_2C_6H_5$ | 5 |
| 27 | H | H | $COC_6H_5$ | H | $OC_3H_7$(i) | H | H | H | $CH_2OCH_2CH=CH_2$ | 1 |
| 28 | $SO_2CH_3$ | H | $NO_2$ | CN | $OC_4H_9$ | H | $NHCOC_3H_7$ | H | $CH_2O(CH_2)_2OCH_3$ | 6 |
| 29 | Cl | H | $NO_2$ | Cl | $C_2H_5$ | H | $C_2H_5$ | H | $CH_2OC_6H_5$ | 1 |
| 30 | H | $CH_3$ | $-N=N-C_6H_3-$ | $OCH_3$ | $OCH_3$ | H | $CH_3$ | H | $CH_2OC_6H_5$ | 2 |
| 31 | H | H | $NO_2$ | H | $C_2H_5$ | H | Cl | H | $CH_2OC_6H_4-4CH_3$ | 1 |
| 32 | $SO_2CH_3$ | H | $NO_2$ | H | $OC_2H_5$ | H | $CH_3$ | H | $CH_2OCOC_2H_5$ | 2 |
| 33 | CN | H | CN | H | H | H | $NHCOCH_3$ | H | $CH_2OCOC_6H_5$ | 9 |
| 34 | Br | H | $NO_2$ | H | $C_3H_7$ | H | $C_3H_7$ | H | $CH/\overline{O}(CH_2)_2O\underline{H}/CH_3$ | 4 |
| 35 | H | H | $CF_3$ | H | $C_2H_5$ | H | H | H | $CH(OC_4H_9)CH_3$ | 1 |
| 36 | H | $CH_3$ | $-N=N-C_6H_3-2-CN-4NO_2$ | $CH_3$ | $H_3$ | H | $CH_3$ | H | $C(CH_3)_2O(CH_2)_4OH$ | 3 |
| 37 | H | H | $-N=N-C_6H_5$ | H | H | H | $NHCO(CH_2)_2OH$ | H | $CH(OH)C_3H_7$ | 2 |
| 38 | H | H | $-N=N-C_6H_5$ | H | $OC_6H_{13}$ | H | H | H | $CH/\overline{O}(CH_2)_2C_6H_5/C_4H_9$ | |
| 39 | $NO_2$ | H | $NO_2$ | Cl | $OCH_3$ | H | $CH_3$ | H | $CH=CHCH_3$ | |
| 40 | $NO_2$ | H | $NO_2$ | CN | $OCH_3$ | H | $CH_3$ | H | $(CH_2)_2O(CH_2)_2OC_6H_5$ | |
| 41 | $OCH_3$ | H | $-N=N-C_6H_4-4NO_2$ | H | $OCH_3$ | H | H | H | $(CH_2)_2OCOC_3H_7$ | 2 |
| 42 | H | $COOC_2H_5$ | $NO_2$ | H | $OCH_3$ | H | Cl | H | $COH(OCH_3)COH(C_2H_5)C_3H_7$ | |
| 43 | H | H | CN | H | $C_2H_5$ | H | H | | $(CH_2)_3OH$ | 1 |

T A B E L L E IX (Fortsetzung)

| Nr. | $R^1$ | $R^2$ | $R^3$ | $R^4$ | $R^5$ | $R^6$ | $R^7$ | $R^8$ | Z | N |
|---|---|---|---|---|---|---|---|---|---|---|
| 44 | $NO_2$ | H | $NO_2$ | H | $OC_2H_5$ | H | $OC_2H_5$ | H | $(CH_2)_3OCOC_6H_5$ | 6 |
| 45 | Br | H | $NO_2$ | H | $OCH_3$ | H | $CH_3$ | H | $(CH_2)_2OC_4H_9(i)$ | 5 |
| 46 | Br | H | $NO_2$ | H | $CH_3$ | H | $NHCOC_2H_5$ | H | $COOC_2H_5$ | 6 |
| 47 | CN | H | $NO_2$ | H | $OCH_3$ | H | $CH_3$ | H | $CH_2COO(CH_2)_2OCH_3$ | 6 |
| 48 | H | H | $NO_2$ | H | $OC_2H_5$ | H | $OC_2H_5$ | H | $(CH_2)_2COOCH_2C_6H_5$ | 2 |
| 49 | Cl | H | $COOCH_3$ | H | H | H | $NHCOC_6H_5$ | H | $COOC_4H_5$ | 2 |
| 50 | H | H | $NO_2$ | H | $CH_3$ | H | Cl | H | $OC_2H_5$ | 1 |
| 51 | Cl | H | H | H | $OCH_3$ | H | $NHCOC_4H_9$ | H | $OC_4H_9$ | 2 |
| 52 | CN | H | $NO_2$ | $NO_2$ | $OCH_3$ | H | $OCH_3$ | H | $OC_6H_{11}$ | 9 |
| 53 | $NO_2$ | H | $NO_2$ | H | $OC_2H_5$ | H | $CH_3$ | H | $O(CH_2)_2OC_2H_5$ | 5 |
| 54 | H | H | CN | H | $OC_2H_5$ | H | H | H | $OC_6H_5$ | 2 |
| 55 | H | $OCH_3$ | $-N=N-C_6H_4-4NO_2$ | $OCH_3$ | $C_2H_5$ | H | $C_2H_5$ | H | $OC_6H_1-4-OCH_3$ | 7 |
| 56 | CN | H | $NO_2$ | Br | H | H | $OC_2H_5$ | H | $OCH_2C_6H_5$ | 2 |
| 57 | H | H | $-N=N-C_6H_4-4NO_2$ | H | H | H | $CH_3$ | H | $NHC_3H_7$ | 2 |
| 58 | $NO_2$ | H | $NO_2$ | H | $OCH_3$ | H | $OCH_3$ | H | $NHC_6H_{13}$ | 6 |
| 59 | H | H | $CF_3$ | H | $CH_3$ | H | H | $CH_3$ | $NHCH_2C_6H_5$ | 1 |
| 60 | H | H | $NO_2$ | H | $OCH_3$ | H | $NHSO_2CH_3$ | H | $NHC_5H_9$ | 2 |
| 61 | CN | H | $NO_2$ | H | Cl | H | $NHC.OCH_3$ | H | $NHCH_2CH=CH_2$ | 6 |
| 62 | Br | H | $COOC_4H_9$ | H | $OC_2H_5$ | H | H | H | $NHC_6H_5$ | 1 |
| 63 | CN | H | $NO_2$ | CN | $OCH_3$ | $CH_3$ | H | $CH_3$ | $NHC_6H_4-Cl$ | 9 |

TABELLE X

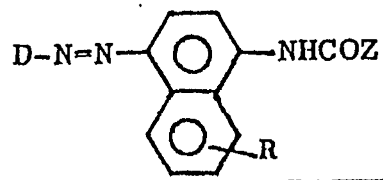

| Nr. | D | R | Z | N |
|---|---|---|---|---|
| 1 | 4-Nitrophenyl- | H | $C_3H_7$ | 2 |
| 2 | 2,4-Dinitrophenyl- | H | $CH_2OC_6H_5$ | 5 |
| 3 | 4-Phenylazophenyl- | H | $C_5H_{11}$ | 2 |
| 4 | 2-Cyan-4-nitrophenyl- | H | $CH_2C_4H_5$ | 2 |
| 5 | 2,4-Dinitrophenyl- | H | $(CH_2)_2OH$ | 5 |
| 6 | 4-Phenylazophenyl- | H | $(CH_2)_2OC_4H_5$ | 2 |
| 7 | 2,4-Dicyanphenyl- | H | $(CH_2)_3OCOCH_3$ | 2 |
| 8 | 2,5-Dichlor-4-nitrophenyl- | H | $OCH_3$ | 5 |
| 9 | 4-(3-Nitrophenylazo)-2-chlorphenyl- | H | $OC_6H_5$ | 5 |
| 10 | 5-Nitrothiazolyl-2- | H | $O(CH_2)_2OC_6H_5$ | 3 |
| 11 | 2-Cyan-4-nitro-6-chlor-phenyl- | H | $NHC_2H_5$ | 5 |
| 12 | 6-Nitrobenzthiazolyl-2- | H | $CH(C_2H_5)_2$ | 3 |
| 13 | 5-Nitrobenzisothiazolyl-3- | H | $CH_2O(CH_2)_2OC_2H_5$ | 3 |
| 14 | 4-Nitrophenyl- | 8-Cl | $CH_2OC_6H_{11}$ | 4 |
| 15 | 2-Cyan-4-nitrophenyl- | 2-$OCH_3$ | $OC_4H_9$ | 3 |
| 16 | 5-Nitrothiazolyl-2- | 5-$OC_4H_9$ | $CH_2O(CH_2)_4OCOCH_3$ | 6 |
| 17 | 2-Chlor-4-nitrophenyl- | 7-$OCH_3$ | $NHCH_2CH(C_2H_5)C_3H_7$ | 5 |
| 18 | 2,4-Dinitrophenyl- | 3-$OC_2H_5$ | $(CH_2)_4OCOC_6H_5$ | 5 |

TABELLE XI

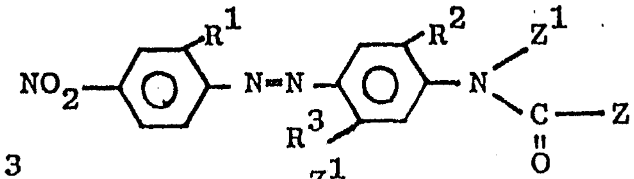

| Nr | $R^1$ | $R^2$ | $R^3$ | $Z^1$ | Z | N |
|---|---|---|---|---|---|---|
| 1 | H | H | $CH_3$ | $C_2H_5$ | $C_2H_5$ | 1 |
| 2 | H | H | $CH_3$ | $(CH_2)_4OH$ | $CH_2OCH_3$ | 1 |
| 3 | H | H | $CH_3$ | $CH_2C_6H_5$ | $C_4H_9$ | 1 |
| 4 | H | $OCH_3$ | $CH_3$ | $(CH_2)_2CN$ | $(CH_2)_3OCOCH_3$ | 2 |
| 5 | H | $OCH_3$ | $CH_3$ | $(CH_2)_2O(CH_2)_2OCH_3$ | $CH=CH-CH_3$ | 2 |
| 6 | H | $OCH_3$ | $CH_3$ | $C_6H_{13}$ | $CH_3$ | 2 |
| 7 | Cl | $OCH_3$ | $CH_3$ | $(CH_2)_2COOOC_2H_5$ | $(CH_2)O(CH_2)_2OCH_3$ | 5 |
| 8 | Cl | $OCH_3$ | $CH_3$ | $(CH_2)_2OH$ | $CH_2O(CH_2)$ OH | 5 |
| 9 | Br | $OCH_3$ | $CH_3$ | $(CH_2)_2C_6H_5$ | $C_5H_{11}$(i) | 5 |
| 10 | Br | $OCH_3$ | $CH_3$ | $(CH_2)_2OCOCH_3$ | $CH_2OCOCH_3$ | 5 |
| 11 | $NO_2$ | $OCH_3$ | $CH_3$ | $(CH_2)_2O(CH_2)_2CN$ | $C_3H_7$ | 5 |
| 12 | $NO_2$ | $OCH_3$ | $OCH_3$ | $CH_2CH=CH_2$ | $CH=CH_2$ | 6 |
| 13 | $NO_2$ | $OCH_3$ | $OCH_3$ | $(CH_2)_2O(CH_2)_2COOCH_3$ | $(CH_2)_2OCH_3$ | 6 |
| 14 | CN | $OCH_3$ | $OCH_3$ | $C_8H_{17}$(i) | $CH_3$ | 6 |
| 15 | CN | H | $OCH_3$ | $C_4H_9$ | $CH_2CN$ | 1 |
| 16 | Cl | $OCH_3$ | H | $CH_2CH=CH-CH_3$ | $(CH_2)_3$ | 1 |
| 17 | H | $OCH_3$ | H | $(CH_2)_2OH$ | $CH_2OH$ | 1 |
| 18 | H | $OCH_3$ | Cl | $(CH_2)_2OC_6H_5$ | $CH_2OC_2H_5$ | 2 |
| 19 | CN | $OCH_3$ | Cl | $(CH_2)_2CN$ | $(CH_2)_2COOCH_3$ | 2 |
| 20 | H | H | $OCH_3$ | $C_3H_7$ | $C_2H_5$ | 1 |

TABELLE XII

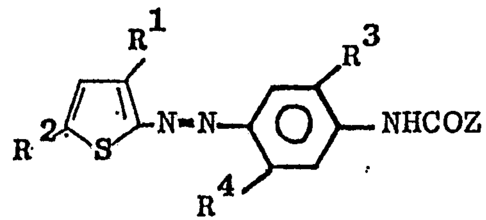

| $R^1$ | $R^2$ | $R^3$ | $R^4$ | Z | N |
|---|---|---|---|---|---|
| $NO_2$ | $NO_2$ | H | $NHCOC_2H_5$ | $NHCH_3$ | 8 |
| $NO_2$ | $NO_2$ | $OCH_3$ | $CH_3$ | $C_2H_5$ | 7 |
| $NO_2$ | $NO_2$ | $OC_2H_5$ | H | $CH_2O(CH_2)_2OCH_3$ | 3 |
| CN | $NO_2$ | $CH_3$ | $NHCOCH_3$ | $OC_3H_7$ | 9 |
| CN | $NO_2$ | $CH_3$ | H | $C_6H_5$ | 2 |
| CN | CN | Cl | $NHCOCH_2OCH_3$ | $(CH_2)_2OC_6H_5$ | 8 |
| CN | CN | $OCH_3$ | $OCH_3$ | $NHC_6H_5$ | 7 |
| CN | Br | $OC_3H_7$ | Cl | $C_4H_5$ | 6 |
| $COOCH_3$ | Na | $C_2H_5$ | $C_2H_5$ | $O(CH_2)_2OCH_3$ | 5 |

<u>Patentansprüche</u>

1. Verfahren zum Färben und Bedrucken von hydrophoben Fasermaterialien, bei dem Färbeflotten bzw. Druckpasten eingesetzt werden, die von wasserlöslichmachenden Gruppen freie Azofarbstoffe der Formel I

$$D-N=N-K-\overset{Z^1}{\overset{|}{N}}-CO-Z \qquad (I)$$

enthalten, worin D den Rest einer Diazokomponente der Naphthalin-, Thiazol-, Thiadiazol-, Benzthiazol-, Benzisothiazol-, Thiophen-Reihe oder einen Rest der Formel II

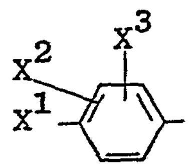

(II)

bedeutet,

$X^1$ = Nitro, Cyan, Trifluormethyl, Alkylsulfonyl mit 1 bis 4 C-Atomen, Phenylsulfonyl, das gegebenenfalls durch Methoxy, Methyl, Chlor, Brom, Nitro substituiert sein kann, Alkoxysulfonyl mit 1 bis 4 C-Atomen, das gegebenenfalls durch Alkoxy mit 1 bis 4 C-Atomen substituiert sein kann, Phenoxysulfonyl, das im Phenylrest gegebenenfalls durch Alkyl mit 1 bis 4 C-Atomen, Alkoxy mit 1 bis 4 C-Atomen, Nitro, Fluor, Chlor oder Brom substituiert sein kann, Alkylcarbonyl mit 1 bis 4 C-Atomen im Alkylrest, Benzoyl, wobei der Phenylrest auch durch Alkyl mit 1 bis 4 C-Atomen, Alkoxy mit 1 bis 4 C-Atomen, Nitro, Fluor, Chlor oder Brom substituiert sein kann, Alkoxycarbonyl mit 1 bis 4 C-Atomen im Alkoxyrest, das gegebenenfalls durch Phenyl, Hydroxy, Alkoxy mit 1 bis 4 C-Atomen oder Alkylcarbonyloxy mit 1 bis 4 C-Atomen im Alkylrest substituiert sein kann, Phenoxycarbonyl, das im Phenylrest gegebenenfalls durch Alkyl mit 1 bis 4 C-Atomen, Alkoxy mit 1 bis 4 C-Atomen, Nitro, Fluor, Chlor oder Brom substituiert sein kann, Aminocarbonyl, Aminosulfonyl, Alkyl-, Di-alkyl-,

Phenyl-alkyl- oder Phenyl-aminocarbonyl mit 1 bis 4 C-Atomen in den Alkylresten, Alkyl-, Dialkyl-, Phenyl-alkyl- oder Phenyl-aminosulfonyl mit 1 bis 4 C-Atomen in den Alkylresten, wobei die Alkylreste der Aminocarbonyl- und Aminosulfonylreste auch noch durch Hydroxy, Alkoxy mit 1 bis 4 C-Atomen oder Alkylcarbonyloxy mit 1 bis 4 C-Atomen im Alkylrest substituiert sein können oder gegebenenfalls unter Einschluß eines Sauerstoffatoms oder einer NH-Gruppe zusammen mit dem Stickstoffatom, an das sie gebunden sind, einen fünf- oder sechsgliedrigen Heterocyclus bilden oder Phenylazo, das durch Cyan, Nitro, Chlor, Brom, Trifluormethyl, Methyl, Ethyl, Methoxy, Ethoxy ein-, zwei- oder dreifach, vorzugsweise ein- oder zweifach substituiert sein kann, bedeuten;

$X^2$ und $X^3$ bedeuten unabhängig voneinander Wasserstoff, Halogen, Alkyl mit 1 bis 4 C-Atomen, Alkoxy mit 1 bis 4 C-Atomen, Phenyl, Phenoxy oder sie haben eine der unter $X^1$ angegebenen Bedeutungen mit Ausnahme von Phenylazo;

K bedeutet den Rest der Formel III

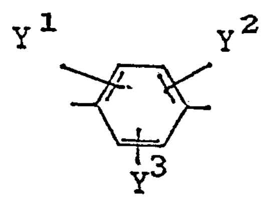

(III)

wobei $Y^1$ Alkyl mit 1 bis 4 C-Atomen, Phenyl, Alkoxy mit 1 bis 4 C-Atomen, das auch durch Phenyl, Phenoxy, Hydroxy, Alkoxy mit 1 bis 4 C-Atomen oder Alkylcarbonyloxy mit 1 bis 4 C-Atomen im Alkylrest substituiert sein kann, Phenoxy, Alkylcarbonylamino mit 1 bis 4 C-Atomen in der Alkylgruppe, das auch durch Chlor, Brom, Hydroxy, Alkoxy mit 1 bis 4 C-Atomen, Alkoxyalkoxy mit 3 bis 8 C-Atomen oder Alkylcarbonyloxy mit 1 bis 4 C-Atomen substituiert sein kann, Benzoylamino, das durch Chlor, Brom, Methyl, Ethyl, Methoxy oder Ethoxy substituiert sein kann, Alkylsulfonylamino mit 1 bis 4 C-Atomen in der Alkylgruppe, Phenylsulfonylamino, Halogen, $Y^2$ Wasserstoff, Halogen, Alkyl mit 1 bis 4 C-Atomen, Alkoxy mit

1 bis 4 C-Atomen, das durch Phenyl, Phenoxy, Alkoxy mit 1 bis 4 C-Atomen oder Alkylcarbonyloxy mit 1 bis 4 C-Atomen substituiert sein kann, Benzyloxy, Phenoxyethoxy, Hydroxyethoxy oder einen Rest-$O(CH_2)_nO(CH_2)_mCH_3$, worin n die Zahlen 2, 3 oder 4 und m die Zahlen 0, 1, 2 oder 3 bedeuten, $Y^3$ Wasserstoff oder Alkyl mit 1 bis 4 C-Atomen bedeuten,

oder K bedeutet den Rest einer Kupplungskomponente der Naphthylen-, Pyridindiyl-2,5-, Pyridindiyl-2,3- oder Thiazoldiyl-2,5-Reihe.

Z bedeutet einen Rest der Formel VI $-C_rH_{2r}-(OC_pH_{2p})_n-H$

worin r eine Zahl von 1 bis 8, p eine Zahl von 2 bis 4 und n Null, 1 oder 2, vorzugsweise Null oder 1 ist, mit der Maßgabe, daß die Summe r + np eine Zahl von 3 bis 8 ist, der gegebenenfalls durch Hydroxy, Chlor, Brom, Cyan, Alkoxy mit 1 bis 4 C-Atomen, Alkenoxy mit 3 oder 4 C-Atomen, Cycloalkoxy mit 5 oder 6 C-Atomen, Alkylcarbonyloxy mit 2 bis 4 C-Atomen, Alkoxycarbonyl mit 2 bis 5 C-Atomen, Alkoxyalkoxycarbonyl mit 4 bis 9 C-Atomen, Hydroxyalkoxycarbonyl mit 3 bis 5 C-Atomen, oder durch gegebenenfalls im Phenylkern noch durch Alkyl mit 1 bis 4 C-Atomen oder Alkoxy mit 1 bis 4 C-Atomen, vorzugsweise Methyl oder Methoxy, Chlor, Brom oder Cyan mono- oder disubstituiertes Phenyl, Phenoxy, Benzoyloxy, Phenoxycarbonyl, Phenoxyalkoxycarbonyl mit 2 bis 4 C-Atomen in der aliphatischen Brücke, Phenalkoxycarbonyl mit 1 oder 2 C-Atomen in der aliphatischen Brücke monosubstituiert sein kann und der zusätzlich zu den genannten Substituenten gegebenenfalls noch durch eine Hydroxygruppe substituiert sein kann; Alkenyl mit 2 bis 4, vorzugsweise 3 oder 4 C-Atomen; Cycloalkyl mit 5 oder 6 C-Atomen; Phenyl, das durch Alkyl mit 1 bis 4 C-Atomen, Alkoxy mit 1 bis 4 C-Atomen, Chlor oder Brom, vorzugsweise Methyl oder Methoxy, disubstituiert oder vorzugsweise monosubstituiert sein kann; Alkoxy mit 1 bis 8 vorzugsweise 1 bis 4 C-Atomen, dessen Kohlenstoffkette sofern sie mindestens 3 C-Atome hat, jeweils im Abstand von mindestens 2 C-Atomen durch Sauerstoff ein- oder mehrfach, vorzugsweise einfach, unterbrochen sein kann, wobei der Mindestabstand der Unterbrechung vom Stickstoffatom 2 C-Atome beträgt, und/oder durch

BAD ORIGINAL

Hydroxy, Chlor, Brom, Cyan, Alkenoxy oder durch gegebenenfalls im Phenylkern noch durch Alkyl mit 1 bis 4 C-Atomen, Alkoxy mit 1 bis 4 C-Atomen, vorzugsweise Methyl oder Methoxy, Chlor, Brom oder Cyan mono- oder disubstituiertes Phenyl oder Phenoxy disubstituiert oder vorzugsweise monosubstituiert sein kann; Alkenoxy mit 3 oder 4 C-Atomen; Cycloalkoxy mit 5 oder 6 C-Atomen; Phenoxy, dessen Phenylkern durch Alkyl mit 1 bis 4 C-Atomen, Alkoxy mit 1 bis 4 C-Atomen, Chlor oder Brom, vorzugsweise Methyl oder Methoxy, disubstituiert oder vorzugsweise monosubstituiert sein kann; Alkylamino mit 1 bis 8, vorzugsweise 1 bis 4 C-Atomen, dessen Kohlenstoffkette , sofern sie mindestens 3 C-Atome hat im Mindestabstand von 2 C-Atomen vom Stickstoffatom durch Sauerstoff einfach unterbrochen sein kann und/oder durch Chlor, Brom, Cyan, Alkenoxy oder durch gegebenenfalls im Phenylkern noch durch Alkyl mit 1 bis 4 C-Atomen, Alkoxy mit 1 bis 4 C-Atomen, vorzugsweise Methyl oder

Methoxy, Chlor, Brom oder Cyan mono- oder disubstituiertes Phenyl oder Phenoxy disubstituiert oder vorzugsweise monosubstituiert sein kann; Alkenylamino mit 3 oder 4 C-Atomen; Cycloalkylamino mit 5 oder 6 C-Atomen; Phenylamino, dessen Phenylkern durch Alkyl mit 1 bis 4 C-Atomen, Alkoxy mit 1 bis 4 C-Atomen, Chlor oder Brom, vorzugsweise Methyl oder Methoxy, disubstituiert oder vorzugsweise monosubstituiert sein kann, und

$Z^1$ ist Wasserstoff, oder hat eine der für Z angegebenen Bedeutungen.

2. Verfahren gemäß Anspruch 1, dadurch gekennzeichnet, daß Färbeflotten bzw. Druckpasten eingesetzt werden, die von wasserlöslichmachenden Gruppen freie Azofarbstoffe der Formel I enthalten, worin der für D stehende Rest einer Diazokomponente der Thiazolreihe ein Thiazolyl-2-rest ist, der durch Nitro, Chlor, Brom, Cyan, Methylsulfonyl, Phenyl, Methyl, Ethyl, Alkoxycarbonyl mit 1 bis 2 C-Atomen im Alkoxyrest, Benzyloxycarbonyl, Phenoxycarbonyl, Alkyl- oder Dialkyl-aminocarbonyl mit 1 bis 4 C-Atomen in den Alkylresten mono- oder disubstituiert oder durch Phenylazo monosubsti-

BAD ORIGINAL

tuiert sein kann, wobei der Phenylazorest seinerseits durch Chlor, Brom, Cyan oder Nitro mono- oder disubstituiert sein kann, einer Diazokomponente der Thiadiazolreihe ein 1,3,4-Thiadiazolyl-5-Rest ist, der durch Alkyl mit 1 bis 4 C-Atomen, Phenyl, Benzyl, Methoxyethyl oder ein 1,2,4-Thiadiazolyl-5-rest, der durch Alkylthio mit 1 bis 4 C-Atomen, Benzyl-thio oder Methoxyethyl-thio substituiert ist, einer Diazokomponente der Benzthiazolreihe der Benzthiazolyl-2-rest ist, der durch Methyl, Ethyl, Methoxy, Ethoxy, Chlor, Nitro mono- oder disubstituiert sein kann, einer Diazokomponente der Benzisothiazolylreihe ein 1,2-Benzisothiazolyl-3-rest ist, der durch Nitro, Methylsulfonyl, Methoxycarbonyl, Chlor, Brom, Methyl, Ethyl, Methoxy oder Ethoxy mono- oder disubstituiert sein kann , einer Diazokomponente der Thiophenreihe ein Thienyl-2-rest ist, der durch Nitro, Cyan, Brom, Chlor, Methoxycarbonyl oder Ethoxycarbonyl substituiert ist, einer Diazokomponente der Naphthalinreihe ein 1-Naphthylrest ist, der durch Nitro, Halogen, Phenylazo substituiert ist, wobei der Phenylazorest seinerseits durch Nitro, Cyan und/oder Halogen substituiert sein kann.

3. Verfahren gemäß Anspruch 1, dadurch gekennzeichnet, daß Färbeflotten bzw. Druckpasten eingesetzt werden, die von wasserlöslichmachenden Gruppen freie Azofarbstoffe der Formel I enthalten, worin D einen Rest der Formel II bedeutet, wobei $X^1$, $X^2$ und $X^3$ insbesondere folgende Bedeutungen besitzen:
$X^1$ : Nitro, Cyan, Trifluormethyl, Methylsulfonyl, Phenylsulfonyl, Alkoxysulfonyl mit 1 bis 4 C-Atomen, das auch durch Alkoxy mit 1 bis 4 C-Atomen substituiert sein kann, Phenoxysulfonyl, Alkylcarbonyl mit 1 bis 4 C-Atomen, Benzoyl, wobei der Phenylrest auch durch Alkoxy mit 1 bis 4 C-Atomen, Halogen, insbesondere Chlor oder vorzugsweise durch Alkyl mit 1 bis 4 C-Atomen oder Nitro substituiert sein kann, Alkoxycarbonyl mit 1 bis 4 C-Atomen im Alkoxyrest, der auch durch Alkoxy mit 1 bis 4 C-Atomen, Alkylcarbonyloxy mit 1 bis 4 C-Atomen, insbesondere aber durch Phenyl, Hydroxy, oder Methoxy substituiert sein kann, Phenoxycarbonyl, Phenylazo, das durch Nitro, Chlor, Brom, Cyan, Methyl mono- oder

BAD ORIGINAL

disubstituiert sein kann; $X^2$ und $X^3$ bedeuten unabhängig voneinander Wasserstoff, Chlor, Brom, Methyl, Ethyl, Methoxy, Ethoxy, Phenyl, Phenoxy oder einen der für $X^1$ angegebenen Reste mit Ausnahme von Phenylazo.

4. Verfahren gemäß Anspruch 1, dadurch gekennzeichnet, daß Färbeflotten bzw. Druckpasten eingesetzt werden, die von wasserlöslichmachenden Gruppen freie Azofarbstoffe der Formel I enthalten worin
K einen Rest der Formel III bedeutet, wobei
$Y^1$ Alkyl mit 1 bis 4 C-Atomen, Alkoxy mit 1 bis 4 C-Atomen, das auch durch Phenyl, Phenoxy, Hydroxy, Alkoxy mit 1 bis 4 C-Atomen oder Alkylcarbonyloxy mit 1 bis 4 C-Atomen substituiert sein kann, Alkylcarbonylamino mit 1 bis 4 C-Atomen in Alkylrest, der auch durch Alkoxy mit 1 bis 4 C-Atomen oder Alkoxyalkoxy mit insgesamt 8 C-Atomen substituiert sein kann, Benzoylamino, Alkylsulfonylamino mit 1 bis 2 C-Atomen, Phenylsulfonylamino, Chlor oder Brom, $Y^2$ Wasserstoff, Chlor oder Brom, Alkyl mit 1 bis 4 C-Atomen, Alkoxy mit 1 bis 4 C-Atomen, das durch Phenyl, Phenoxy, Hydroxy, Alkoxy mit 1 bis 4 C-Atomen oder Alkylcarbonyloxy mit 1 bis 4 C-Atomen substituiert sein kann, $Y^3$ Wasserstoff, Alkyl mit 1 bis 4 C-Atomen bedeutet und Z und $Z^1$ die in Anspruch 1 angegebenen Bedeutungen haben.

5. Verfahren gemäß Anspruch 1, dadurch gekennzeichnet, daß Färbeflotten bzw. Druckpasten eingesetzt werden, die von wasserlöslichmachenden Gruppen freie Azofarbstoffe der Formel I enthalten, worin der für K stehende Rest einer Kupplungskomponente der Naphthylenreihe das Naphthylen (-1,4) ist, das durch Chlor, Brom, Methyl, Ethyl, Methoxy oder Ethoxy substituiert sein kann, einer Kupplungskomponente der Pyridindiyl-2,5-Reihe das 6-Amino-4-methyl-3-cyan-pyridindiyl(-2,5) oder das 4,6-Diamino-5-cyan-pyridindiyl (-2-3) ist, deren Aminogruppen durch Alkoxyalkyl, Hydroxyalkoxyalkyl, Phenoxyalkoxyalkyl, Acyloxy-alkoxyalkyl substituiert sind, wobei die Alkyl-, Alkoxy-, Hydroxyalkoxy-Reste z.B. jeweils 1 bis 4 C-Atome und der Acyloxy-Rest 2 bis 5 C-Atome aufweisen.

6. Verfahren gemäß den Ansprüchen 1 bis 5, dadurch gekennzeichnet, daß Färbeflotten bzw. Druckpasten eingesetzt werden, die von wasserlöslichmachenden Gruppen freie Azofarbstoffe der Formel I enthalten, worin Z einen Rest der Formel VI

$$-C_rH_{2r}-(-OC_pH_{2p})_n-H$$

worin r eine Zahl von 1 bis 8, p eine Zahl von 2 bis 4 und n Null oder 1, vorzugsweise Null ist, mit der Maßgabe, daß die Summe r + np eine Zahl von 3 bis 8 ist, bedeutet, der gegebenenfalls durch Hydroxy, Chlor, Brom, Cyan, Alkoxy mit 1 bis 4 C-Atomen, Cycloalkoxy mit 5 oder 6 C-Atomen, Alkylcarbonyloxy mit 2 bis 4 C-Atomen, Alkoxycarbonyl mit 2 bis 5 C-Atomen, Alkoxyalkoxycarbonyl mit 4 bis 9 C-Atomen, Hydroxyalkoxycarbonyl mit 3 bis 5 C-Atomen, oder durch ggf. im Phenylkern noch durch Methyl, Methoxy, Chlor, Brom, oder Cyan mono- oder disubstituiertes Phenyl, Phenoxy, Benzoyloxy, Phenoxycarbonyl, Phenoxyalkoxy-carbonyl mit 2 bis 4 C-Atomen in der aliphatischen Brücke, Phenalkoxycarbonyl mit 1 oder 2 C-Atomen in der aliphatischen Brücke monosubstituiert sein kann; Alkenyl mit 3 oder 4 C-Atomen; Cycloalkyl mit 5 oder 6 C-Atomen; Phenyl, das durch Chlor, Methyl oder Methoxy monosubstituiert sein kann; Alkoxy mit 1 bis 4 C-Atomen, dessen Kohlenstoffkette, sofern sie mindestens 3 C-Atome hat, im Mindestabstand von 2 C-Atomen vom Stickstoffatom durch Sauerstoff einfach unterbrochen sein kann und/oder durch Hydroxy, Chlor, Brom, Cyan, Alkenoxy oder durch gegebenenfalls im Phenylkern noch durch Methyl, Methoxy, Chlor, Brom oder Cyan mono- oder disubstituiertes Phenyl oder Phenoxy monosubstituiert sein kann; Phenoxy, dessen Phenylkern durch Chlor, Brom, Methyl oder Methoxy monosubstituiert sein kann; Alkylamino mit 1 bis 4 C-Atomen, dessen Kohlenstoffkette, sofern sie mindestens 3 C-Atome hat, im Mindestabstand von 2 C-Atomen vom Stickstoffatom durch Sauerstoff einfach unterbrochen sein kann und/oder durch Hydroxy, Chlor, Brom, Cyan, Alkenoxy oder durch gegebenenfalls im Phenylkern noch durch Methyl oder Methoxy, Chlor, Brom oder Cyan mono- oder disubstituiertes Phenyl oder Phenoxy monosubstituiert sein kann; Phenylamino, dessen Phenylkern durch Chlor, Brom, Methyl oder Methoxy monosubstituiert sein kann, bedeutet und
$Z^1$ eine der für Z genannten Bedeutungen hat, oder vorzugsweise Wasserstoff ist.

7. Verfahren gemäß Anspruch 1, dadurch gekennzeichnet, daß Färbeflotten bzw. Druckpasten eingesetzt werden, die Mischungen der von wasserlöslichmachenden Gruppen freie Azofarbstoffe der Formel I enthalten, worin die Symbole D, K, Z und $Z^1$ die in den Ansprüchen 1 bis 6 genannten Bedeutungen haben.

8. Von wasserlöslichmachenden Gruppen freie Azofarbstoffe der Formel I

$$\text{D-N=N-K-}\overset{Z^1}{\overset{|}{\text{N}}}\text{-CO-Z} \qquad (I)$$

worin D den Rest einer Diazokomponente der Thiazol-, Thiadiazol-, Benzthiazol-, Benzisothiazol-, Thiophen-Reihe bedeutet und K, Z und $Z^1$ die in Anspruch 1 genannten Bedeutungen hat.

9. Von wasserlöslichmachenden Gruppen freie Azofarbstoffe der Formel I

$$\text{D-N=N-K-}\overset{Z^1}{\overset{|}{\text{N}}}\text{-CO-Z} \qquad (I)$$

worin K den Rest einer Kupplungskomponente der Pyridindiyl-2,5-, Pyridindiyl-2,3- oder Thiazoldiyl-2,5-Reihe bedeutet und D, Z und $Z^1$ die im Anspruch 1 genannten Bedeutungen haben.

10. Von wasserlöslichmachenden Gruppen freie Azofarbstoffe der Formel I

$$\text{D-N=N-K-}\overset{Z^1}{\overset{|}{\text{N}}}\text{-CO-Z} \qquad (I)$$

worin D einen Rest der Formel

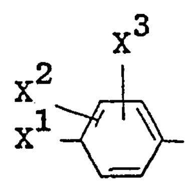

(II)

und K einen Rest der Formel III

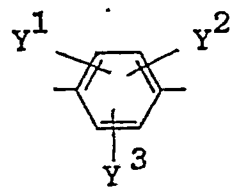

bedeutet, worin

$X^1$ Nitro, Cyan, Trifluormethyl, Alkylsulfonyl mit 1 bis 4 C-Atomen,

Phenylsulfonyl, das gegebenenfalls durch Methoxy, Methyl, Chlor, Brom, Nitro substituiert sein kann, Alkoxysulfonyl mit 1 bis 4 C-Atomen, das gegebenenfalls durch Alkoxy mit 1 bis 4 C-Atomen substituiert sein kann, Phenoxysulfonyl, das im Phenylrest gegebenenfalls durch

Alkyl mit 1 bis 4 C-Atomen, Alkoxy mit 1 bis 4 C-Atomen, Nitro, Fluor, Chlor oder Brom substituiert sein kann, Alkylcarbonyl mit 1 bis 4 C-Atomen im Alkylrest, Benzoyl, wobei der Phenylrest auch durch Alkyl mit 1 bis 4 C-Atomen, Alkoxy mit 1 bis 4 C-Atomen, Nitro, Fluor, Chlor oder Brom substituiert sein kann, Alkoxycarbonyl mit 1 bis 4 C-Atomen im Alkoxyrest, das gegebenenfalls durch Phenyl, Hydroxy, Alkoxy mit 1 bis 4 C-Atomen oder Alkylcarbonyloxy mit 1 bis 4 C-Atomen im Alkylrest substituiert sein kann, Phenoxycarbonyl, das im Phenylrest gegebenenfalls durch Alkyl mit 1 bis 4 C-Atomen, Alkoxy mit 1 bis 4 C-Atomen, Nitro, Fluor, Chlor oder Brom substituiert sein kann, Aminocarbonyl, Aminosulfonyl, Alkyl-, Di-alkyl-,

Phenyl-alkyl- oder Phenyl-aminocarbonyl mit 1 bis 4 C-Atomen in den Alkylresten, Alkyl-, Dialkyl-, Phenyl-alkyl- oder Phenyl-aminosulfonyl mit 1 bis 4 C-Atomen in den Alkylresten, wobei die Alkylreste der Aminocarbonyl- und Aminosulfonylreste auch noch durch Hydroxy, Alkoxy mit 1 bis 4 C-Atomen oder Alkylcarbonyloxy mit 1 bis 4 C-Atomen im Alkylrest substituiert sein können oder gegebenenfalls unter Einschluß eines Sauerstoffatoms oder einer NH-Gruppe zusammen mit dem Stickstoffatom, an das sie gebunden sind, einen fünf- oder

BAD ORIGINAL

sechsgliedrigen Heterocyclus bilden oder Phenylazo, das durch Cyan, Nitro, Chlor, Brom, Trifluormethyl, Methyl, Ethyl, Methoxy, Ethoxy ein-, zwei- oder dreifach, vorzugsweise ein- oder zweifach substituiert sein kann, bedeutet;

$X^2$ und $X^3$ bedeuten unabhängig voneinander Wasserstoff, Halogen, Alkyl mit 1 bis 4 C-Atomen, Alkoxy mit 1 bis 4 C-Atomen, Phenyl, Phenoxy oder sie haben eine der unter $X^1$ angegebenen Bedeutungen mit Ausnahme von Phenylazo.

K bedeutet den Rest der Formel III

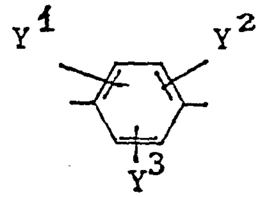

(III)

wobei $Y^1$ Alkyl mit 1 bis 4 C-Atomen, Phenyl, Alkoxy mit 1 bis 4 C-Atomen, das auch durch Phenyl, Phenoxy, Hydroxy, Alkoxy mit 1 bis 4 C-Atomen oder Alkylcarbonyloxy mit 1 bis 4 C-Atomen im Alkylrest substituiert sein kann, Phenoxy, Alkylcarbonylamino mit 1 bis 4 C-Atomen in der Alkylgruppe, das auch durch Chlor, Brom, Hydroxy, Alkoxy mit 1 bis 4 C-Atomen, Alkoxyalkoxy mit 3 bis 8 C-Atomen oder Alkylcarbonyloxy mit 1 bis 4 C-Atomen substituiert sein kann, Benzoylamino, das durch Chlor, Brom, Methyl, Ethyl, Methoxy oder Ethoxy substituiert sein kann, Alkylsulfonylamino mit 1 bis 4 C-Atomen in der Alkylgruppe, Phenylsulfonylamino, Halogen, $Y^2$ Wasserstoff, Halogen, Alkyl mit 1 bis 4 C-Atomen, Alkoxy mit 1 bis 4 C-Atomen, das durch Phenyl, Phenoxy, Alkoxy mit 1 bis 4 C-Atomen oder Alkylcarbonyloxy mit 1 bis 4 C-Atomen substituiert sein kann, Benzyloxy, Phenoxyethoxy, Hydroxyethoxy oder einen Rest-$O(CH_2)_nO(CH_2)_mCH_3$, worin n die Zahlen 2, 3 oder 4 und m die Zahlen 0, 1, 2 oder 3 bedeuten, $Y^3$ Wasserstoff oder Alkyl mit 1 bis 4 C-Atomen bedeuten,

BAD ORIGINAL

Z bedeutet einen Rest der Formel VI

$$-C_rH_{2r}-(-OC_pH_{2p})_n-H$$

worin r eine Zahl von 1 bis 8, p eine Zahl von 2 bis 4 und n Null, 1 oder 2, vorzugsweise Null oder 1 ist, mit der Maßgabe, daß die Summe r + np eine Zahl von 3 bis 8 ist, der gegebenenfalls durch Hydroxy, Chlor, Brom, Cyan, Alkoxy mit 1 bis 4 C-Atomen, Cycloalkoxy mit 5 oder 6 C-Atomen, Alkylcarbonyloxy mit 2 bis 4 C-Atomen, Alkoxycarbonyl mit 2 bis 5 C-Atomen, Alkoxyalkoxycarbonyl mit 4 bis 9 C-Atomen, Hydroxyalkoxycarbonyl mit 3 bis 5 C-Atomen, oder durch gegebenenfalls im Phenylkern noch durch Alkyl mit 1 bis 4 C-Atomen oder Alkoxy mit 1 bis 4 C-Atomen, vorzugsweise Methyl oder Methoxy, Chlor, Brom oder Cyan mono- oder disubstituiertes Phenyl, Phenoxy, Benzoyloxy, Phenoxycarbonyl, Phenoxyalkoxycarbonyl mit 2 bis 4 C-Atomen in der aliphatischen Brücke, Phenalkoxycarbonyl mit 1 oder 2 C-Atomen in der aliphatischen Brücke monosubstituiert sein kann und der zusätzlich zu den genannten Substituenten gegebenenfalls noch durch eine Hydroxygruppe substituiert sein kann;

Alkenoxy mit 3 oder 4 C-Atomen; Cycloalkoxy mit 5 oder 6 C-Atomen; Phenoxy, dessen Phenylkern durch Alkyl mit 1 bis 4 C-Atomen, Alkoxy mit 1 bis 4 C-Atomen, Chlor oder Brom, vorzugsweise Methyl oder Methoxy, disubstituiert oder vorzugsweise monosubsituiert sein kann; Alkylamino mit 1 bis 8, vorzugsweise 1 bis 4 C-Atomen, dessen Kohlenstoffkette, sofern sie mindestens 3 C-Atome hat im Mindestabstand von 2 C-Atomen von Stickstoffatom durch Sauerstoff einfach unterbrochen sein kann und/oder durch Chlor, Brom, Cyan, Alkenoxy oder durch gegebenenfalls im Phenylkern noch durch Alkyl mit 1 bis 4 C-Atomen, Alkoxy mit 1 bis 4 C-Atomen, vorzugsweise Methyl oder Methoxy, Chlor, Brom oder Cyan mono- oder disubstituiertes Phenyl oder Phenoxy disubstituiert oder vorzugsweise monosubstituiert sein kann; Alkenylamino mit 3 oder 4 C-Atomen; Cycloalkylamino mit 5 oder 6 C-Atomen; Phenylamino, dessen Phenylkern durch Alkyl mit 1 bis 4 C-Atomen, Alkoxy mit 1 bis 4 C-Atomen, Chlor oder Brom, vorzugsweise Methyl oder

BAD ORIGINAL

Methoxy, disubstituiert oder vorzugsweise monosubstituiert sein kann, und, sofern keines der Symbole $Y^1$, $Y^2$ und $Y^3$ für Wasserstoff steht, auch noch Methyl oder Phenyl, das durch Alkyl mit 1 bis 4 C-Atomen, Alkoxy mit 1 bis 4 C-Atomen, Chlor oder Brom, vorzugsweise Methyl oder Methoxy, disubstituiert oder vorzugsweise monosubstituiert sein kann, bedeutet.

Europäisches Patentamt

# EUROPÄISCHER RECHERCHENBERICHT

Nummer der Anmeldung
EP 81 10 3781

| EINSCHLÄGIGE DOKUMENTE | | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | |
| X | FR - A - 2 203 854 (BASF)<br>* Seite 1, Formel 1; Seite 8, Absatz 2, Seiten 11,12; Beispiel 3; Seite 15, Beispiel 12; Seite 17, Beispiel 55; Seite 21, Beispiele 134,136; Seite 24, Beispiel 204; Seite 25, Beispiel 219; Seite 24, Beispiel 241; Seite 33, Beispiel 315 *<br>& DE - A - 2 251 719<br>-- | 1-10 | D 06 P 1/18<br>C 09 B 29/06<br>29/42//<br>C 09 B 43/124 |
| | | | RECHERCHIERTE SACHGEBIETE (Int. Cl.3) |
| X | US - A - 3 904 596 (BLACKWELL, PEAVY)<br>* Spalte 4, Zeilen 25-68; Spalte 5, Zeilen 1,2; Spalte 6, Tabelle 4; Spalte 9, Zeilen 5-58; Spalte 10, Beispiel 1; Spalte 11, Beispiel 2; Spalten 11/14; Tabelle 5, Beispiele 1-22, 24-27,33 *<br>-- | 1,3-5, 9,10 | C 09 B 29/00<br>29/01<br>29/033-<br>29/095<br>29/28<br>29/36<br>29/42<br>31/00-<br>31/043<br>31/053<br>31/14<br>31/153<br>43/12-<br>43/132<br>./. |
| X | GB - A - 1 387 811 (YORKSHIRE CHEM LTD.)<br>* Seite 1, Zeilen 20-35; Seite 3, Beispiel 6; Seite 6 *<br>-- | 1,3,4, 10 | |
| | | | KATEGORIE DER GENANNTEN DOKUMENTE |
| X | US - A - 3 244 525 (MORY, BOEHL)<br>* Spalten 5/6; Tabelle, Beispiele 1-3,6,12,13 *<br>& CH - A - 412 566<br>-- | 10 | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| | FR - A - 1 455 159 (BAYER)<br>* Seite 1, Formel II und Formel III; Seite 4, Beispiel 4 *<br>-- ./. | 1,3,4, 10 | &: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Den Haag | 09-11-1981 | GREEN |

0045354

Europäisches Patentamt

**EUROPÄISCHER RECHERCHENBERICHT**

Nummer der Anmeldung
EP 81 10 3781
-2-

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | & CH - A - 448 332<br>-- | | |
| | FR - A - 1 461 862 (BAYER)<br>* Seite 1, Formel II und Formel III; Seiten 4,5; Beispiele 1, 2, Tabelle *<br>& CH - A - 471 862<br>-- | 1,3,4, 10 | |
| A | FR - A - 879 986 (I.G. FARBEN)<br>* Seite 3, Beispiel 4 *<br>-- | 10 | RECHERCHIERTE SACHGEBIETE (Int. Cl. 3) |
| A | DE - C - 88 013 (LUCIUS & BRUNING)<br>* Seiten 1,2 *<br>-- | 10 | D 06 P 1/18<br>1/16 |
| | CHEMICAL ABSTRACTS, Band 83, Nr. 14, 6. Oktober 1975, Seite 154, Nr. 116922v<br>Columbus, Ohio, U.S.A.<br>& JP - A - 75 36784 (NIPPON KAYAKU CO., LTD.) 07-08-1975<br>* Zusammenfassung *<br>-- | 1,3,4, 10 | |
| EX | EP - A - 0 030 656 (BASF)<br>* Seite 1, Formel I; Seite 18, Beispiele 82,83,86; Seite 19, Beispiel 92; Seite 20, Beispiel 102; Seite 21, Beispiel 114; Seite 23, Beispiele 139,140 *<br>---- | 1,3,4, 10 | |

EPA Form 1503.2 06.78